# EUROPÄISCHE PATENTSCHRIFT

(11) **EP 0 537 686 B1**
(45) Veröffentlichungstag und Bekanntmachung des Hinweises auf die Patenterteilung: **12.01.2005**
(21) Anmeldenummer: 92117477.7
(22) Anmeldetag: 13.10.1992
(51) Int. Cl.: C08F 10/00, C08F 4/602

(54) **Verfahren zur Herstellung eines Olefinpolymers unter Verwendung von Metallocenen mit speziell substituierten Indenylliganden**
Process for preparing an olefinpolymer by using metallocenes having specially substituted indenylligands
Procédé de préparation d'un polymère oléfinique à l'aide de métallocènes ayant des ligands indényl substituées d'une manière spécifique

(30) Priorität: 15.10.1991 DE 4134088
(43) Veröffentlichungstag der Anmeldung: 21.04.1993
(73) Patentinhaber: Basell Polyolefine GmbH, 50389 Wesseling (DE)
(72) Erfinder: Winter, Andreas, Dr., W-6246 Glashütten/Ts. (DE); Antberg, Martin, Dr., W-6238 Hofheim/Ts (DE); Dolle, Volker, Dr., W-6140 Bensheim (DE); Rohrmann, Jürgen, Dr., W-6233 Kelkheim/Ts. (DE); Spaleck, Walter, Dr., W-6237 Liederbach (DE)

(56) Entgegenhaltungen:
- EP-A- 0 355 439
- EP-A- 0 363 029
- EP-A- 0 413 326
- EP-A- 0 516 018
- EP-A- 0 529 908
- EP-A- 0 530 908

## Beschreibung

Die Erfindung bezieht sich auf ein Verfahren zur Herstellung von Olefinpolymeren und -copolymeren unter Verwendung von Metallocenen mit speziell substituierten Indenylliganden.

Die Verwendung von chiralen Metallocenen als Katalysatorkomponente bei der Olefinpolymerisation ist bekannt und führt zu hochisotaktischen Polyolefinen mit hoher Kristallinität und hohen Schmelzpunkten (vgl. Angew. Chem. 97 (1985) 507, DE-P 40 35 886.0).

Bei dem Einsatz von nicht chiralen Metallocenen erhält man ataktische Polymere, die wegen ihrer unausgewogenen und ungenügenden Produkteigenschaften technisch nur von begrenzter Bedeutung sind.

Von großem Interesse sind Produkte, die in ihrem Eigenschaftsprofil zwischen diesen beiden Extremen liegen.

EP-A 530 908 offenbart ein Verfahren zur Herstellung von verbrückten Metallocenverbindungen sowie nach diesem Verfahren erhältliche Metallocene. EP-A 516 018 beschreibt ein Verfahren zur Herstellung von Polyolefinen mit breiter Molmassenverteilung, bei dem Metallocene mit substituierten Indenylliganden eingesetzt werden. EP-A 529 908 lehrt auf Metallocenverbindungen beruhende Katalysatoren, mit denen hochstereoreguläre Polyolefine mit hohen Molekulargewichten erhalten werden können.

Es bestand somit die Aufgabe, ein geeignetes Verfahren bzw. ein geeignetes Katalysatorsystem zu finden, das die Herstellung von Polymeren mit reduzierter Kristallinität, erhöhter Schlagzähigkeit, erhöhter Transparenz, hoher Fließfähigkeit bei Verarbeitungstemperatur, niedriger Molmasse und reduziertem Schmelzpunkt ermöglicht.

Anwendungsschwerpunkte solcher Polymere sind Weichmacher- und Gleitmittelrezepturen, Schmelzkleberanwendungen, Beschichtungen, Abdichtungen, Isolierungen, Ausgießmassen oder Schalldämmungsmaterialien.

Die Erfindung betrifft somit ein Verfahren zur Herstellung eines Olefinpolymers durch Polymerisation oder Copolymerisation eines Olefins der Formel R^{a}-CH=CH-R^{b}, worin R^{a} und R^{b} gleich oder verschieden sind und ein Wasserstoffatom oder einen Kohlenwasserstoffrest mit 1 bis 14 C-Atomen bedeuten, oder R^{a} und R^{b} mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einem Metallocen als Übergangsmetallverbindung und einem Cokatalysator gebildet wird, dadurch gekennzeichnet, daß das Metallocen eine Verbindung der Formel I, 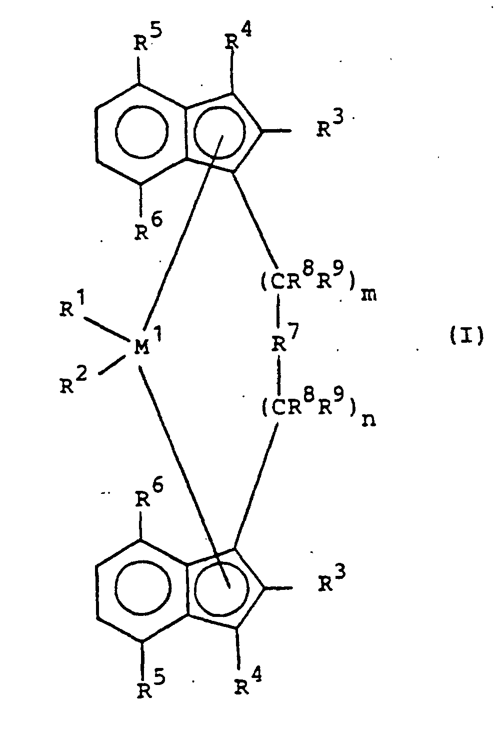 worin
- M¹: ein Metall der Gruppe IVb, Vb oder Vlb des Periodensystems ist,
- R¹ und R²: gleich oder verschieden sind und ein Wasserstoffatom, eine C₁-C₁₀-Alkylgruppe, eine C₁₋C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
- R³ und R⁴: gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
- R⁵ und R⁶: gleich oder verschieden sind und die für R³ und R⁴ genannte Bedeutung haben, mit der Maßgabe, daß R⁵ und R⁶ nicht Wasserstoff sind,
- R⁷: 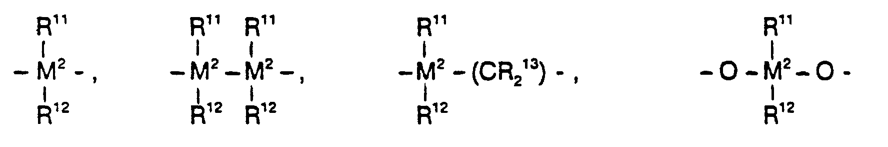 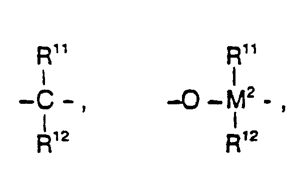
=BR¹¹, =AIR¹¹, -Ge-, -Sn-, -O-, -S-, =SO, =SO₂, =NR¹¹, =CO, =PR¹¹ oder =P(O)R¹¹ ist,
wobei
- R¹¹, R¹² und R¹³: gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
- M²: Silizium, Germanium oder Zinn ist,
- R⁸: gleich oder verschieden sind und ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten,
- R⁹: gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten, und
- m und n: gleich oder verschieden sind und null, 1 oder 2 sind, wobei m plus n null, 1 oder 2 ist, und
wobei die Metallocene
2,2-propyl bis(4,7-bis(dimethylamino)-1-indenyl)zirkondichlorid,
2,2-propyl bis(4,7-dimethyl)-1-indenyl)zirkondichlorid,
rac-Dimethylsilylbis(4,7-dimethylindenyl-1)zirkondichlorid,
rac-Dimethylsilylbis(2,4,7-trimethylindenyl-1)zirkondichlorid und
rac-Dimethylsilylbis(2,4,7-trimethyl-4,5,6,7-tetrahydroindenyl-1)zirkondichlorid ausgenommen sind,
oder der Formel la ist, 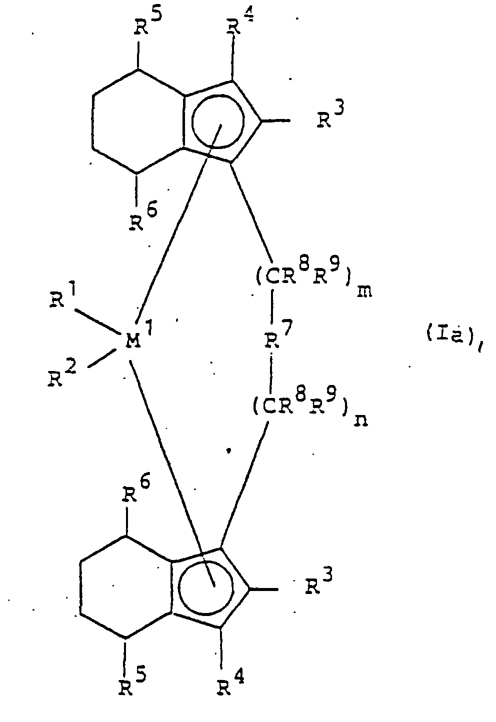 worin
- M¹: ein Metall der Gruppe IVb, Vb oder Vlb des Periodensystems ist,
- R¹ und R²: gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
- R³ und R⁴: gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
- R⁵ und R⁶: gleich oder verschieden sind und die für R³ und R⁴ genannte Bedeutung haben, mit der Maßgabe, daß R⁵ und R⁶ nicht Wasserstoff sind,
- R⁷: 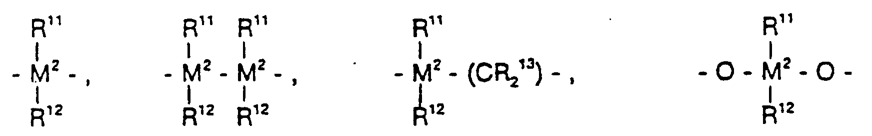 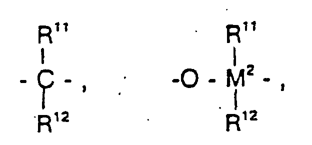
=BR¹¹, =AIR¹¹, -Ge-, -Sn-, -O-, -S-, =SO, =SO₂, =NR¹¹, =CO, =PR¹¹ oder =P(O)R¹¹ ist,
wobei
- R¹¹, R¹² und R¹³: gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
- M²: Silizium, Germanium oder Zinn ist,
- R⁸ und R⁹: gleich oder verschieden sind und die für R¹¹ genannte Bedeutung haben und
- m und n: gleich oder verschiedensind und null, 1 oder 2 sind, wobei m plus n null, 1 oder 2 ist.

Alkyl steht für geradkettiges oder verzweigtes Alkyl. Halogen (halogeniert) bedeutet Fluor, Chlor, Brom oder Jod, bevorzugt Fluor oder Chlor.

Der für das erfindungsgemäße Verfahren zu verwendende Katalysator besteht aus einem Cokatalysator und einem Metallocen der Formel I oder Ia.

In Formel I oder la ist M¹ ein Metall der Gruppe IVb, Vb oder Vlb des Periodensystems, beispielsweise Titan, Zirkon, Hafnium, Vanadium, Niob, Tantal, Chrom, Molybdän, Wolfram, vorzugsweise Zirkon, Hafnium und Titan.

R¹ und R² sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R³ und R⁴ sind gleich oder verschieden und bedeuten ein Wasserstoffatom, ein Halogenatom, bevorzugt ein Fluor-, Chlor- oder Bromatom, eine C₁-C₁₀-, vorzugsweise C₁-C₄-Alkylgruppe, die halogeniert sein kann, eine C₆-C₁₀-, vorzugsweise C₆-C₈-Arylgruppe, einen -NR₂¹⁰, -SR¹⁰, -OSiR₃¹⁰, -SiR₃¹⁰ oder -PR₂¹⁰-Rest, worin R¹⁰ ein Halogenatom, vorzugsweise Chloratom, oder eine C₁-C₁₀-, vorzugsweise C₁-C₃-Alkylgruppe oder C₆-C₁₀-, vorzugsweise C₆-C₈-Arylgruppe ist. Besonders bevorzugt sind R³ und R⁴ Wasserstoff oder Methyl.

R⁵ und R⁶ sind gleich oder verschieden, bevorzugt gleich, und haben die für R³ und R⁴ beschriebene Bedeutung, mit der Maßgabe, daß R⁵ und R⁶ nicht Wasserstoff sein dürfen. Bevorzugt sind R⁵ und R⁶ (C₁-C₄)-Alkyl, das halogeniert sein kann, wie Methyl, Ethyl, Propyl, Isopropyl, Butyl, Isobutyl oder Trifluorethyl, insbesondere Methyl.

R⁷ ist 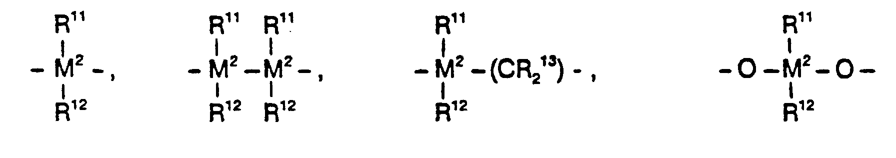 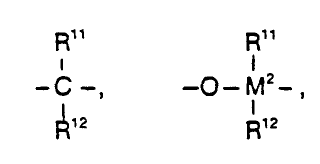 =BR¹¹, =AIR¹¹, -Ge-, -Sn-, -O-, -S-, =SO, =SO₂, =NR¹¹, =CO,
=PR¹¹ oder =P(O)R¹¹, wobei R¹¹, R¹² und R¹³ gleich oder verschieden sind und ein Wasserstoffatom, ein Halogenatom, eine C₁-C₁₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-, vorzugsweise C₆-C₈-Arylgruppe, eine C₆-C₁₀-Fluorarylgruppe, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹¹ und R¹² oder R¹¹ und R¹³ bilden jeweils zusammen mit den sie verbindenden Atomen einen Ring.

M² ist Silizium, Germanium oder Zinn, bevorzugt Silizium und Germanium.

R⁷ ist vorzugsweise =CR¹¹R¹², =SiR¹¹R¹², =GeR¹¹R¹², -O-, -S-, =SO, =PR¹¹ oder =P(O)R¹¹.

R⁸ und R⁹ sind gleich oder verschieden und haben für Verbindungen der Formel la die für R¹¹ genannte Bedeutung und für Verbindungen der Formel I bedeuten
- R⁸: ein Halogenatom, eine C₁-C₁₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-, vorzugsweise C₆-C₈-Arylgruppe, eine C₆-C₁₀-Fluorarylgruppe, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹¹ und R¹² oder R¹¹ und R¹³ bilden jeweils zusammen mit den sie verbindenden Atomen einen Ring und
- R⁹: ein Wasserstoffatom, ein Halogenatom, eine C₁-C₁₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-, vorzugsweise C₆-C₈-Arylgruppe, eine C₆-C₁₀-Fluorarylgruppe, vorzugsweise Pentafluorphenylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹¹ und R¹² oder R¹¹ und R¹³ bilden jeweils zusammen mit den sie verbindenden Atomen einen Ring

m und n sind gleich oder verschieden und bedeuten null, 1 oder 2, bevorzugt null oder 1, wobei m plus n null, 1 oder 2, bevorzugt null oder 1 ist.

Somit sind die besonders bevorzugten Metallocene die Verbindungen der Formeln A und B sowie deren hydrierte Formen im Sinne der Formel la 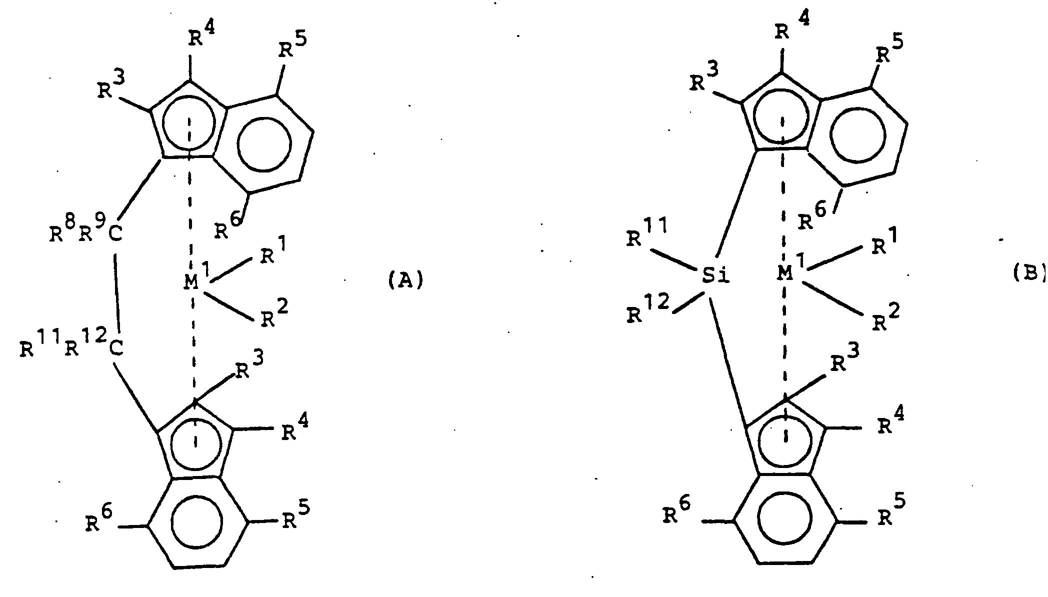 mit
M¹ = Zr, Hf; R¹, R² = (C₁-C₃)-Alkyl, Chlor; R³, R⁴ = Wasserstoff, (C₁-C₄)-Alkyl; R⁵, R⁶ = (C₁-C₄)-Alkyl, das halogeniert sein kann, und R⁸, R⁹. R¹¹ und R¹² mit den obengenannten Bedeutungen, insbesondere die in den Ausführungsbeispielen aufgeführten Verbindungen I und Ia.

Die chiralen Metallocene werden bevorzugt als Racemat eingesetzt. Verwendet werden kann aber auch die reine R- oder S-Form. Mit diesen reinen stereoisomeren Formen ist optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann. Wird die meso-Form nicht abgetrennt, entsteht neben isotaktischen Polymeren auch ataktisches Polymer. Für bestimmte Anwendungen - weiche Formkörper beispielsweise - kann dies durchaus wünschenswert sein.

Die Trennung der Stereoisomeren ist im Prinzip bekannt.

Die vorstehend beschriebenen Metallocene können nach folgendem Reaktionsschema hergestellt werden:

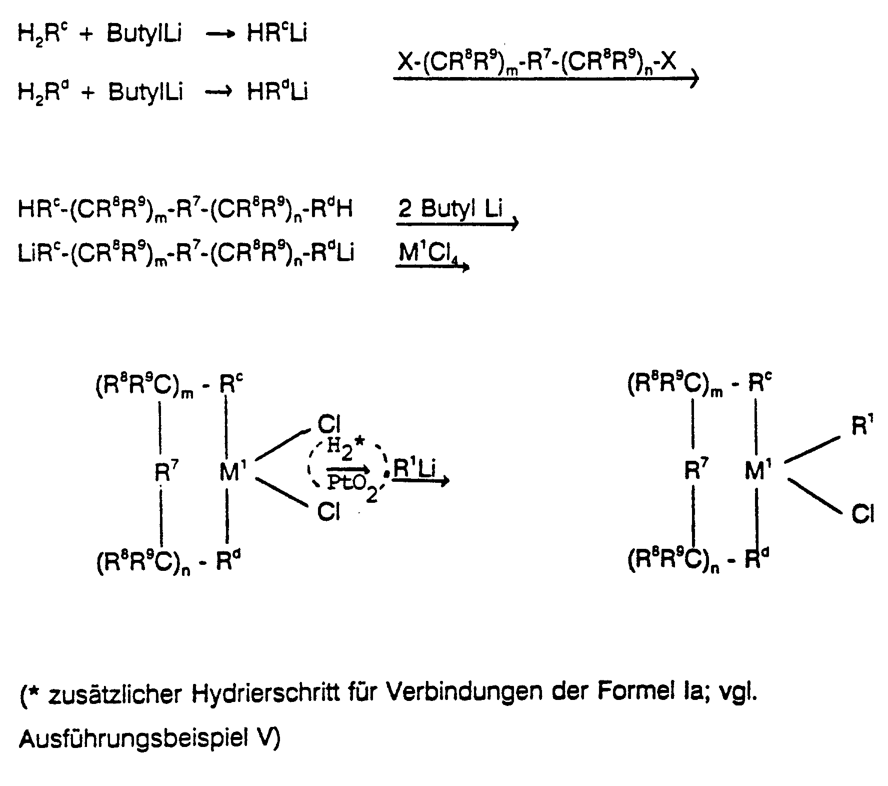

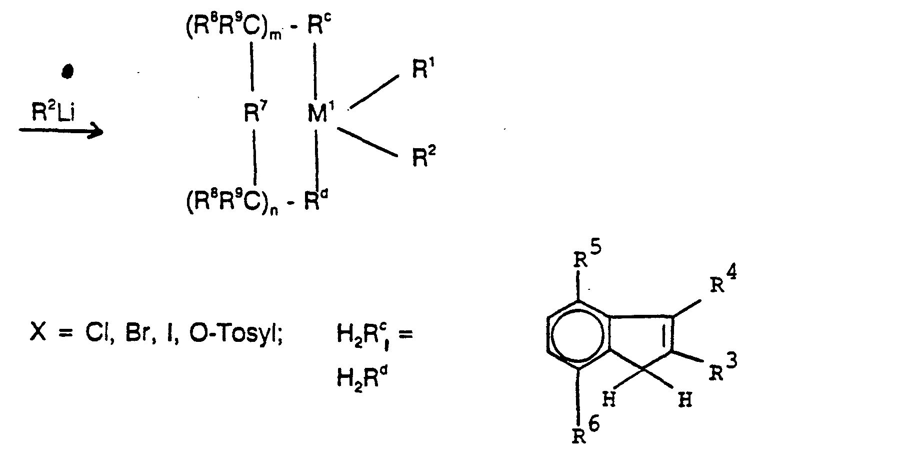

Die Herstellungsverfahren sind literaturbekannt; vgl. Journal of Organometallic Chem. 288 (1985) 63-67, EP-A 320 762 und die Ausführungsbeispiele.

Die Herstellung der Ausgangsverbindungen H₂R^{c} bzw. H₂R^{d} erfolgt gemäß Bull. Soc. Chim. Fr. 6 (1969) 1981 und den Ausführungsbeispielen.

Erfindungsgemäß wird als Cokatalysator bevorzugt ein Aluminoxan der Formel (II) 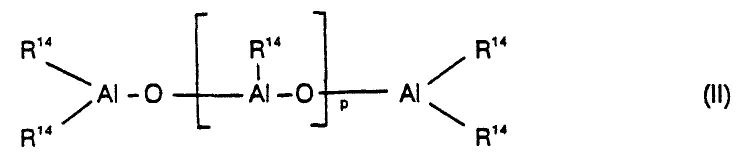 für den linearen Typ und/oder der Formel (III) 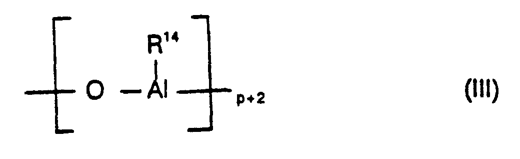 für den cyclischen Typ verwendet, wobei in den Formeln (II) und (III) die Reste R¹⁴ gleich oder verschieden sein können und eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeutet.

Bevorzugt sind die Reste R¹⁴ gleich und bedeuten Methyl, Isobutyl, Phenyl oder Benzyl, besonders bevorzugt Methyl.

Sind die Reste R¹⁴ unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste R¹⁴) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit veschiedenen Alkylgruppen R¹⁴ werden entsprechend der gewünschten Zusammensetzung zwei verschiedene Aluminiumtrialkyle (AlR₃ + AlR'₃) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Das Metallocen kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Erfindungsgemäß können an Stelle oder neben eines Aluminoxans Verbindungen der Formeln RₓNH₄₋ₓBR'₄, RₓPH₄₋ₓBR'₄, R₃CBR'₄ oder BR'₃ als geeignete Cokatalysatoren verwendet werden. In diesen Formeln bedeutet x eine Zahl von 1 bis 4, bevorzugt 3, die Reste R sind gleich oder verschieden, bevorzugt gleich, und bedeuten C₁-C₁₀-Alkyl, C₆-C₁₈-Aryl oder 2 Reste R bilden zusammen mit dem sie verbindenden Atom einen Ring, und die Reste R' sind gleich oder verschieden, bevorzugt gleich, und stehen für C₆-C₁₈-Aryl, das durch Alkyl, Haloalkyl oder Fluor substituiert sein kann.

Insbesondere steht R für Ethyl, Propyl, Butyl oder Phenyl und R' für Phenyl, Pentafluorphenyl, 3,5-Bistrifluormethylphenyl, Mesityl, Xylyl oder Tolyl (vgl. EP-A 277 003, EP-A 277 004 und EP-A 426 638).

Bei Verwendung der obengenannten Cokatalysatoren besteht der eigentliche (aktive) Polymerisationskatalysator aus dem Reaktionsprodukt von Metallocen und einer der genannten Verbindungen. Daher wird zunächst dieses Reaktionsprodukt bevorzugt außerhalb des Polymerisationsreaktors in einem separaten Schritt unter Verwendung eines geeigneten Lösungsmittels hergestellt.

Prinzipiell ist als Cokatalysator erfindungsgemäß jede Verbindung geeignet, die aufgrund ihrer Lewis-Acidität das neutrale Metallocen in ein Kation überführen und dieses stabilisieren kann ("labile Koordination"). Darüberhinaus soll der Cokatalysator bzw. das aus ihm gebildete Anion keine weiteren Reaktionen mit dem gebildeten Metallocenkation eingehen (vgl. EP-A 427 697).

Zur Entfernung von im Olefin vorhandener Katalystorgifte ist eine Reinigung mit einem Aluminiumalkyl, beispielsweise AlMe₃ oder AlEt₃ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Die Polymerisation oder Copolymerisation wird in bekannter Weise in Lösung, in Suspension oder in der Gasphase, kontinuierlich oder diskontinuierlich, ein- oder mehrstufig bei einer Temperatur von -60 bis 200°C, vorzugsweise 30 bis 80°C, durchgeführt. Polymerisiert oder copolymerisiert werden Olefine der Formel R^{a}-CH=CH-R^{b}. In dieser Formel sind R^{a} und R^{b} gleich oder verschieden und bedeuten ein Wasserstoffatom oder einen Alkylrest mit 1 bis 14 Atomen. R^{a} und R^{b} können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbonadien. Insbesondere werden Propylen und Ethylen polymerisiert.

Als Molmassenregler und/oder zur Aktivitätserhöhung wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Die anderen genannten Cokatalysatoren werden in etwa äquimolaren Mengen zum Metallocen verwendet. Prinzipiell sind aber auch höhere Konzentrationen möglich.

Wenn die Polymerisation als Suspensions- oder Lösungspolymerisation durchgeführt wird, wird ein für das Ziegler- Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Pentan, Hexan, Heptan, Isooctan, Cyclohexan, Methylcyclohexan, genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die beschriebenen Metallocene bevorzugt im technisch interessanten Temperaturbereich zwischen 30 und 80°C bei hoher Polymerisationsaktivität Polymere mit dem gewünschten Eigenschaftsspektrum erzeugen.

Darüberhinaus wurde überraschend gefunden, daß mit den Metallocenen I und Ia Olefine wie Propylen oder höhermolekulare Homologe zu Polymeren mit niedriger Molmasse polymerisiert werden können, das Verhalten dieser Metallocene gegenüber Ethylen jedoch völlig andersartig ist - es werden mit excellenter Aktivität sehr hochmolekulare Polyethylene gebildet.

Die nachfolgenden Beispiele sollen die Erfindung näher erläutern.

Es bedeuten:
- VZ =: Viskositätszahl in cm³/g

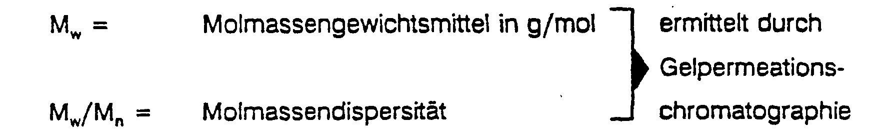

- Schmp. =: Schmelzpunkt ermittelt mit DSC (20°C/min Aufheiz-/Abkühlgeschwindigkeit)
- II =: Isotaktischer Index (II = mm+ 1/2 mr) ermittelt durch ¹³C-NMR-Spektroskopie
- SD =: Polymerschüttdichte in g/dm³

### Synthese der in den Beispielen und Vergleichsbeispielen verwendeten Metallocene:

### I. rac-[Dimethylsilylbis{1-(4,7-dimethylindenyl)}]zirkondichlorid

### 1. 4,7-Dimethylinden

23 g (1,0 mol) Natrium wurden in 250 ml abs. Methanol portionsweise gelöst. Anschließend wurde bei 0°C eine Mischung aus 45,6 g (0,40 mol) 2,5-Hexandion und 39,7 g (0,60 mol) Cyclopentadien in h zugetropft. Nach 1 h Rühren bei Raumtemperatur wurden 50 ml Wasser zugesetzt und mit ca. 2 l Diethylether extrahiert. Der nach dem Abziehen des Lösemittels verbleibende Rückstand wurde an 1,4 kg Kieselgel 60 chromatographiert. Mit Hexan/Methylenchlorid (10:1) wurden 38 g (65 %) 4,7-Dimethylinden eluiert (gelbliches Öl).

### 2. Bis{1-(4,7-dimethylindenyl)}dimethylsilan

7,0 g (48,5 mmol) 4,7-Dimethylinden wurden in 60 ml Diethylether gelöst und unter Ar-Atmosphäre mit 19,4 ml (48,5 mmol) einer 2,5 M Lösung von Butyllithium in Hexan versetzt. Nach kurzer Zeit fiel ein weißer Niederschlag aus, der durch Zugabe von 4 ml THF wieder in Lösung gebracht wurde. Nach 2 h Rühren bei Raumtemperatur wurde die Lösung langsam zu einer Lösung von 3,1 g (24,3 mmol) Dimethyldichlorsilan in 15 ml Diethylether getropft. Nach 19 h Rühren wurde die Mischung auf Eiswasser gegossen und mehrmals ausgeethert. Die vereinigten Ether-Extrakte wurden mit Wasser gewaschen und über Natriumsulfat getrocknet. Das nach Abziehen des Lösemittels unter vermindertem Druck zurückbleibende gelbe Öl wurde an 350 g Kieselgel 60 chromatographiert. Mit einem Laufmittelgemisch aus Hexan/Methylenchlorid (20:1) konnten 3,1 g (37 %) des Produktes eluiert werden (weißes Pulver, 2 Isomere, Fp. 67°C).

### 3. rac-[Dimethylsilylbis{1-(4,7-dimethylindenyl)}]zirkondichlorid

Eine Lösung von 1,5 g (4,86 mmol) des Ligandsystems in 15 ml Diethylether wurde bei Raumtemperatur mit 4,0 ml (10 mmol) einer 2,5 M Lösung von Butyllithium in Hexan versetzt und 5 h bis zum Ende der Gasentwicklung gerührt. Die gelbe Lösung wurde eingedampft und der Rückstand mit Hexan gewaschen um überschüssiges Butyllithium zu entfernen. Nach dem Trocknen im Ölpumpenvakuum bei 40 - 50°C wurde das Dilithiosalz bei -78°C zu einer Suspension von 1,08 g (4,3 mmol) Zirkontetrachlorid in 10 ml Methylenchlorid gegeben. Nach dem Aufwärmen über Nacht wurde die orangefarbene Suspension über eine G4-Fritte filtriert. Das orangefarbene Filtrat wurde eingedampft. Man erhielt 1,58 g (72 %) des Komplexes als Mischung der racemischen mit der meso-Form im Verhältnis 5:1. Das reine Racemat konnte durch Umkristallisation aus Methylenchlorid in Form großer oranger Kristalle gewonnen werden. ¹H-NMR des Racemats (CDCl₃): 7,07 (d,2,β-H), 6,75-7,05 (m,4,Arom.-H), 6,17 (d,2,α-H), 2,53 (s,6,CH₃), 2,38 (s,6,CH₃), 1,14 (s,6,Si(CH₃)₂).

### II. rac-[1,2-Ethandiylbis{1-(2-methyl-4,7-dimethylindenyl)}]zirkondichlorid

### 1. 4,7-Dimethyl-2-indanon

8,2 g (57 mmol) 4,7-Dimethylinden (Herstellung siehe Beispiel I) wurden bei 35-40°C unter kräftigem Rühren zu einer Mischung aus 34 ml Ameisensäure und 8 ml (80 mmol) H₂O₂ (35 %) innerhalb 80 min getropft (exotherme Reaktion). Nach Rühren über Nacht wurde die Ameisensäure unter vermindertem Druck abgezogen (40°C/20 Torr). Das zurückgebliebene orangefarbene Öl wurde mit 200 ml 7%iger Schwefelsäure versetzt und destilliert. Das Produkt wurde mit insgesamt 800 ml Wasser überdestilliert, wobei das Wasser konstant nachdosiert wurde. Das Produkt schied sich zum Teil als Feststoff im Kühler ab und wurde durch kurzzeitiges Aufwärmen in die Vorlage überführt. Das wäßrige Destillat wurde mit einer gesättigten Natriumcarbonatlösung neutralisiert und ausgeethert. Die über Natriumsulfat getrocknete organische Phase wurde eingeengt, wobei das Produkt kristallisierte. Man erhielt 5,6 g (62 %) des Indanons in Form farbloser Nadeln.

### 2. 2,4,7-Trimethylinden

Eine Lösung von 5,5 g (34,3 mmol) des Indanons in 100 ml Diethylether wurde langsam mit 20 ml (60 mmol) einer 3M Lösung von Methylmagnesiumbromid in Diethylether versetzt, so daß das Lösemittel leicht siedet. Nach 1 h Kochen unter Rückfluß wurde die weiße Suspension über Nacht gerührt. Die Mischung wurde auf HCI-saures Eis gegossen und mit Diethylether extrahiert. Nach dem Trocknen über Natriumsulfat wurde das Lösemittel vollständig abgezogen. Der Feststoff wurde in 170 ml Toluol suspendiert, mit 0,65 g (3,14 mmol) p-Toluolsulfonsäure versetzt und 1,5 h unter Rückfluß erhitzt. Nach dem Zusetzen von Wasser wurde die organische Phase isoliert, über Natriumsulfat getrocknet und vollständig eingedampft. Der Rückstand wurde an 350 g Kieselgel 60 chromatographiert. Mit Hexan/Methylenchlorid 10:1 wurden 3,0 g (60 %) 2,4,7-Trimethylinden eluiert (weißer Feststoff).

### 3. 1,2-Bis{1-(2,4,7-trimethylindenyl)}ethan

Eine Lösung von 1,7 g (10,5 mmol) 2,4,7-Trimethylinden in 50 ml THF wurde bei Raumtemperatur mit 4,2 ml (10,5 mmol) einer 2,5 M Butyllithium-Lösung in Hexan versetzt und 1 h bei 40°C gerührt. Bei -78°C wurden 0.98 g (5,25 mmol) Dibromethan zugegeben. Die Mischung wurde über Nacht auf Raumtemperatur erwärmt, auf salzsaures Eiswasser gegossen (pH 2) und mit Diethylether extrahiert. Die Etherphase wurde mit NaHCO₃- und NaCl-Lösung gewaschen und über Magnesiumsulfat getrocknet. Beim Einengen des Etherextraktes kristallisierten 350 mg des Produktes in Form eines farblosen Kristallpulvers (2 Isomere). Bei der Chromatographie der Mutterlauge an Kieselgel 60 mit Hexan/Methylenchlorid (10:1) konnten 430 mg unverbrauchtes 2,4,7-Trimethylinden sowie weitere 50 mg des Produktes gewonnen werden. Die Gesamtausbeute betrug 22 %.

### 4. rac-[1,2-Ethandiylbis{1-(2,4,7-trimethylindenyl)}]zirkondichlorid

Eine Lösung von 400 mg (1,16 mmol) des Chelatliganden in 60 ml Diethylether wurde bei Raumtemperatur mit 1,4 ml (3,5 mmol) einer 2,5 M Butyllithiumlösung in Hexan versetzt, wobei eine Rotorangefärbung einsetzte. Nach 2-3 h Rühren bei Raumtemperatur wurden 20 ml Hexan zugesetzt. Der Niederschlag wurde durch Dekantieren der überstehenden Lösung isoliert, mit Hexan gewaschen und 3-4 h im Ölpumpenvakuum getrocknet. Das Dilithiosalz wurde anschließend bei -78°C zu einer Suspension von 240 mg (1,03 mmol) Zirkontetrachlorid in 15 ml Methylenchlorid gegeben. Nach dem Aufwärmen auf Raumtemperatur wurde die orange Suspension über eine G4-Fritte filtriert und mit Methylenchlorid gewaschen. Das Filtrat wurde im Ölpumpenvakuum zur Trockne eingeengt. Man erhielt 120 mg (24 %) des Komplexes als oranges Pulver. ¹H-NMR des Racemats (CDCI₃): 6,8-7,1 (m,4,Arom.-H), 6,30 (s,2,β-H), 3,3-3,5 (m,4,C₂H₄), 2,60 (s,6,CH₃), 2,27 (s,6,CH₃), 1,57 (s,6,CH₃).

### III. rac-[Dimethylsilylbis{1-(3,4,7-trimethylindenyl)}]zirkondichlorid

### 1. 3,4,7-Trimethylinden

Zu einer Lösung von 8,6 g (975 mmol) Natrium in 200 ml Methanol wurde bei 0°C innerhalb 1 h eine Mischung aus 12 g (150 mmol) Methylcyclopentadien und 17,1 g (150 mmol) 2,5-Hexandion getropft. Nach 18 h Rühren bei Raumtemperatur wurde die dunkelrote Mischung auf Eiswasser gegossen und ausgeethert. Nach dem Trocknen über Natriumsulfat wurde das Lösemittel abgezogen und das verbleibende Öl an 600 g Kieselgel 60 chromatographiert. Mit Hexan als Laufmittel konnten dicht aufeinanderfolgend zunächst 3,2 9 (13 %) 3,4,7-Trimethylinden und anschließend 1,5 g (6 %) 2,4,7-Trimethylinden eluiert werden. Die anschließende Umkristallisation aus Hexan lieferte die reinen Produkte.

### 2. Bis{1-(3,4,7-trimethylindenyl)}dimethylsilan

Eine Lösung von 3,2 g (20,2 mmol) 3,4,7-Trimethylinden in 40 ml THF wurde bei 0°C mit 8,1 ml (20,2 mmol) einer 2,5 M Butyllithiumlösung in Hexan versetzt, noch 1 h unter Rückfluß erhitzt und anschließend bei Raumtemperatur zu einer Lösung von 1,3 g (10,1 mmol) Dimethyldichlorsilan in 10 ml THF gegeben. Die rote Suspension rührte 17 h bei Raumtemperatur und wurde noch weitere 4 h unter Rückfluß zum Sieden erhitzt. Die Mischung wurde auf Eis gegossen und ausgeethert. Die Ether-Extrakte wurden vereinigt, über Natriumsulfat getrocknet und zur Trockne eingedampft. Die Umkristallisation aus Hexan lieferte 1,4 g (37 %) des Produktes in Form beigefarbener Kristalle (Isomere).

### 3. rac-[Dimethylsilylbis{1-(3,4,7-dimethylindenyl)}]zirkondichlorid

Eine Lösung von 1,4 g (3,8 mmol) des Ligandsystems in 25 ml Diethylether wurde bei 0°C mit 3,4 ml (8,4 mmol) einer 2,5 M Butyllithiumlösung in Hexan versetzt. Nach 2-3 h Rühren bei Raumtemperatur wurde auf 15 ml eingeengt und der Niederschlag über eine G4-Fritte filtriert. Nach dem Waschen mit Hexan wurde dieser im Ölpumpenvakuum getrocknet. Das hellbeige Dilithiosalz wurde bei -78°C zu 800 mg (3,5 mmol) Zirkontetrachlorid in 20 ml Methylenchlorid gegeben. Die Mischung wurde innerhalb 3-4 h auf Raumtemperatur erwärmt und über eine G4-Fritte filtriert. Das Filtrat wurde mi 20 ml Hexan versetzt und auf ein Volumen von 10 ml eingeengt. Bei -35°C kristallisierten 500 mg des Komplexes (reines Racemat). ¹H-NMR (CDCl₃): 6,6-6,9 (m,4,Arom.-H), 5,75 (s,2,α-H), 2,50 (s,6,CH₃), 2,45 (s,6,CH₃), 2,40 (s,6,CH₃), 1,07 (s,6,Si-CH₃).

### IV. rac-[1,2-Ethandiylbis{1-(4,7-dimethyl-indenyl)}]zirkondichlorid

### 1. 1,2-Bis(4,7-dimethylindenyl)ethan

Zu 6,19 g (42,9 mmol) 4,7-Dimethylinden in 150 ml THF wurden unter Ar-Atmosphäre 27 ml (43,2 mmol) einer 1,6 M Lösung von Butyllithium in Hexan bei Raumtemperatur zugetropft und 1,5 h bei 60°C gerührt. Es wurde auf -78°C gekühlt und 1,86 ml (21,5 mmol) 1,2-Dibromethan zugegeben und 2 h bei Raumtemperatur weitergerührt. Die Reaktionsmischung wurde auf 2 n wäßrige HCl gegossen, die organische Phase abgetrennt und nacheinander mit gesättigter wäßriger NaHCO₃-, NaCl-Lösung gewaschen und getrocknet (MgSO₄). Das nach Abziehen des Lösungsmittels unter vermindertem Druck zurückbleibende Öl wurde in Hexan aufgenommen und der entstandene Niederschlag abgetrennt. Nach Trocknen im Ölpumpenvakuum wurden 4,2 g (62 %) Produkt erhalten.

### 2. rac-[1,2-Ethandiylbis{1-(4,7-dimethyl-indenyl)}]zirkondichlorid

2,14 g (6,8 mmol) des Ligandsystems wurden in 80 ml THF gelöst und bei Raumtemperatur und unter magnetischem Rühren innerhalb von 15 min 8,7 ml (13,9 mmol) einer 1,6 M Lösung von Butyllithium in Hexan zugetropft und 1 h bei 50°C bis zum Ende der Gasentwicklung gerührt. Das Lösungsmittel wurde im Ölpumpenvakuum entfernt und der Rückstand mit Hexan gewaschen um überschüssiges Butyllithium zu entfernen. Nach Trocknen im Ölpumpenvakuum wurde das Dilithiosalz gelöst in 100 ml THF und 2,65 g (7,1 mmol) ZrCl₄^{·}2THF gelöst in 100 ml THF simultan zu 50 ml THF im Verlauf von 1 h getropft. Nach Rühren über Nacht wurde das Lösungsmittel unter vermindertem Druck entfernt, der Rückstand in Toluol aufgenommen, filtriert und das Lösungsmittel entfernt. Der Rückstand wurde zur Verfestigung mit n-Pentan verrührt und aus Toluol bei -35°C kristallisiert. Man erhielt 1,9 g (59 %) des Komplexes als Mischung der racemischen und der meso-Form im Verhältnis 3:1. Das reine Racemat konnte durch Umkristallisation aus Toluol/Pentan erhalten werden. ¹H-NMR des Racemats (CDCl₃): 6,80 (d,2,β-H), 6,70-7,00 (m,4,arom.-H), 6,30 (2,d,α-H), 3,50-4,30 (m,4,2CH₂), 2,73 (s,3,CH₃), 2,30 (s,3,CH₃).

### V. rac-[1,2-Ethandiylbis{1-(4,7-dimethyl-4,5,6,7-tetrahydroindenyl)}]zirkondichlorid

1,47 g (3,1 mmol) CH₂CH₂ (4,7-Me₂-Ind)₂ZrCl₂ wurden in 70 ml Methylenchlorid gelöst, mit 100 mg PtO₂ versetzt und 24 h bei Raumtemperatur und 100 bar Überdruck hydriert. Nach Filtration wurde das Lösungsmittel im Vakuum entfernt und der Rückstand aus Hexan/Toluol umkristallisiert. Man erhielt 1,0 g (67 %) gelber Kristalle. ¹H-NMR des Racemats (CDCI₃): 6,60 (d,2,β-H), 5,85 (2,d,α-H), 2,30-3,30 (m,16, CH₂ und CH), 1,45 (d,3,CH₃), 1,35 (d,3,CH₃).

### VI. rac-[1,2-Butandiylbis{1-(4,7-dimethyl-indenyl)}]zirkondichlorid

### 1. 1,2-Bis(4,7-dimethylindenyl)butan

Zu 11,8 g (82 mmol) 4,7-Dimethylinden in 200 ml THF und unter Ar-Atmosphäre wurden 52 ml (83,2 mmol) einer 1,6 M Lösung von Butyllithium in Hexan bei Raumtemperatur zugetropft und 1 h bei 60°C gerührt. Es wurde auf -78°C gekühlt, 5 ml (40 mmol) 1,2-Dibrombutan zugegeben und über Nacht bei Raumtemperatur weitergerührt. Die Reaktionsmischung wurde auf 2n wäßrige HCI gegossen, die organische Phase abgetrennt, nacheinander mit gesättigter wäßriger NaHCO₃-, NaCI-Lösung gewaschen und getrocknet (MgSO₄). Das nach Abziehen des Lösungsmittels unter vermindertem Druck zurückbleibende Öl wurde an 350 g Kieselgel (Hexan) chromatographiert. Nach Trocknen im Ölpumpenvakuum wurden 1,4 g (10 %) Produkt erhalten.

### 2. rac-[1,2-Butandiylbis{1-(4,7-dimethyl-indenyl)}]zirkondichlorid

1,4 g (4 mmol) des Ligandensystems wurden in 50 ml THF gelöst und bei Raumtemperatur und magn. Rühren innerhalb von 15 min 5,1 ml (18,2 mmol) einer 1,6 M Lösung von Butyllithium in Hexan zugetropft und 1,5 h bei 60°C bis zum Ende der Gasentwicklung gerührt. Das Lösungsmittel wurde im Ölpumpenvakuum entfernt und der Rückstand mit Hexan gewaschen um überschüssiges Butyllithium zu entfernen. Nach Trocknen im Ölpumpenvakuum wurde das Dilithiosalz im Verlauf von 50 min portionsweise zu 1,55 g (4,1 mmol) ZrCl₄^{·}2THF in 100 ml THF gegeben und 3,5 h weitergerührt. Nach Filtration und Entfernen des Lösungsmittels wurde mit Toluol/Hexan extrahiert, filtriert und das Lösungsmittel entfernt. Der Rückstand wurde zur Verfestigung mit n-Pentan verrührt und aus Toluol bei -35°C kristallisiert. Man erhielt 0,72 g (35 %) des Komplexes als Mischung der racemischen und der meso-Form. Das reine Racemat konnte durch Umkristallisation aus Toluol/Pentan erhalten werden. ¹H-NMR des Racemats (CDCl₃): 6,80 (d,2,β-H), 6,70-7,00 (m,4,arom-H), 6,25 (2,d,α-H), 3,50-4,30 (m,5,2CH₂ und CH), 2,70 (s,3,CH₃), 2,35 (s,3,CH₃), 1,1 (t,3,CH₃).

### Polymerisationsbeispiele

### Vergleichsbeispiel 1

Ein trockener 16-dm³-Reaktor wurde mit Stickstoff gespült und mit 10 dm³ flüssigem Propylen befüllt. Dann wurden 30 cm³ toluolische Methylaluminoxanlösung (entsprechend 40 mmol Al, mittlerer Oligomerisierungsgrad n = 20) zugegeben und der Ansatz bei 30°C 15 Minuten gerührt.

Parallel dazu wurden 9,9 mg (0,02 mmol) rac-Dimethylsilyl (4,7-dimethyl-1-indenyl)₂ zirkondichlorid in 15 cm³ toluolischer Methylaluminoxanlösung (20 mmol Al) gelöst und durch 15 minütiges Stehenlassen voraktiviert. Die Lösung wurde dann in den Reaktor gegeben, durch Wärmezufuhr auf 70°C aufgeheizt (10°C/min) und das Polymerisationssystem 1 h durch Kühlung bei 70°C gehalten. Gestoppt wurde die Polymerisation durch Abgasen des überschüssigen Monomeren. Es wurden 1,39 kg Polypropylen erhalten. Die Aktivität des Metallocens betrug somit 140,4 kg PP/g Metallocen x h.
VZ = 20 cm³/g, M_{w} = 12500 g/mol, M_{w}/Mₙ = 2,1, Schmp. = 128°C, SD = 500 g/dm³, II = 90 %.

### Vergleichsbeispiel 2

Vergleichsbeispiel 1 wurde bei 50°C Polymerisationstemperatur wiederholt. Es wurden 0,65 kg Polypropylen, entsprechend 65,7 kg PP/g Metallocen x h, erhalten.
VZ = 30 cm³/g, M_{w} = 14500 g/mol, M_{w}/Mₙ = 2,1, Schmp. = 134°C, SD = 422 g/dm³, II = 95 %.

### Vergleichsbeispiel 3

Vergleichsbeispiel 1 wurde mit der doppelten Metallocenmenge bei 30°C Polymerisationstemperatur wiederholt. Es wurden 0,28 kg Polypropylen, entsprechend 14,9 kg PP/g Metallocen x h, erhalten.
VZ = 40 cm³/g, M_{w} = 16000 g/mol, M_{w}/Mₙ = 2,3, Schmp. = 139°C.,

### Vergleichsbeispiel 4

Vergleichsbeispiel 1 wurde wiederholt, vor Zugabe des flüssigen Propylens wurden jedoch 5 Ndm³ Wasserstoff in den Reaktor gegeben, die Metalloceneinwaage betrug 10,6 mg. Es wurden 2,52 kg Polymer, entsprechend 237,7 kg PP/g Metallocen x h, erhalten.
VZ = 21 cm³/g, M_{w} = 13100 g/mol, M_{w}/Mₙ = 1,9, Schmp. = 131 °C.

### Vergleichsbeispiel 5

Vergleichsbeispiel 1 wurde wiederholt, als Metallocen wurden jedoch 14,7 mg (0,031 mmol) rac-Ethylen(4,7-dimethyl-1-indenyl)₂ zirkondichlorid eingesetzt. Es wurden 2,92 kg Polypropylen, entsprechend einer Metallocenaktivität von 198,6 kg PP/g Metallocen x h, erhalten.
VZ = 18 cm³/g, M_{w} = 8400 g/mol, M_{w}/Mₙ = 2,1, Schmp. = 124°C, SD = 411 g/dm³, II = 90 %.

### Vergleichsbeispiel 6

Vergleichsbeispiel 5 wurde bei 50°C Polymerisationstemperatur wiederholt. Es wurden 1,38 kg Polymer, entsprechend 93,9 kg PP/g Metallocen x h erhalten.
VZ = 17 cm³/g, M_{w} = 8100 g/mol, M_{w}/Mₙ = 2,0, Schmp. = 130°C, SD = 453 g/dm³.

### Vergleichsbeispiel 7

Vergleichsbeispiel 5 wurde bei 30°C Polymerisationstemperatur wiederholt. Es wurden 0,37 kg Polymer, entsprechend 25,2 kg PP/g Metallocen x h erhalten.
VZ = 40 cm³/g, M_{w} = 32000 g/mol, M_{w}/Mₙ = 2,7, Schmp. = 150°C, SD = 347 g/dm³, II = 94 %.

### Beispiel 8

Vergleichsbeispiel 1 wurde wiederholt, als Metallocen wurden jedoch 14,5 mg rac-Ethylen(4,7-dimethyl-4,5,6,7-tetrahydro-1-indenyl)₂ zirkondichlorid verwendet. Es wurden 1,37 kg Polypropylen, entsprechend einer Metallocenaktivität von 94,5 kg PP/g Metallocen x h erhalten.
VZ = 23 cm³/g, M_{w} = 12300 g/mol, M_{w}/Mₙ = 2,3, Schmp. = 121 °C, Glasstufe Tg bei -25°C.

### Beispiel 9

Beispiel 8 wurde mit 15,0 mg des Metallocens bei 50°C Polymerisationstemperatur wiederholt. Es wurden 0,60 kg Polymer, entsprechend 40,0 kg PP/g Metallocen x h, erhalten.
VZ = 35 cm³/g, M_{w} = 24500 g/mol, M_{w}/Mₙ = 2,4, Schmp. = 116°C, Glasstufe Tg bei -22°C.

### Beispiel 10

Vergleichsbeispiel 1 wurde wiederhott. als Metallocen wurden jedoch 15,0 mg rac-Ethylethylen(4,7-dimethyl-1-indenyl)₂ zirkondichlorid verwendet.

Es wurden 1,45 kg Polymer, entsprechend 96,7 kg PP/g Metallocen x h, erhalten.
VZ = 16 cm³/g, M_{w} = 7700 g/mol, M_{w}/Mₙ = 1,8, Schmp. = 129°C.

### Beispiel 11

Beispiel 10 wurde bei 50°C Polymerisationstemperatur wiederholt. Es wurden 0,65 kg Polymer, entsprechend 43,3 kg PP/g Metallocen x h, erhalten.
VZ = 17 cm³/g, Schmp. = 134°C.

### Vergleichsbeispiel 12

Vergleichsbeispiel 1 wurde wiederholt, als Metallocen wurden jedoch 15,2 mg rac-Ethylen(2,4,7-trimethyl-1-indenyl)₂ zirkondichlorid eingesetzt.

Es wurden 1,49 kg Polymer, entsprechend 98,0 kg PP/g Metallocen x h, erhalten.
VZ = 44 cm³/g, M_{w} = 30600 g/mol, M_{w}/Mₙ = 2,3, Schmp. = 145°C.

### Vergleichsbeispiel 13

Vergleichsbeispiel 12 wurde bei 50°C Polymerisationstemperatur wiederholt. Es wurden 0,41 kg Polymer, entsprechend 27,0 kg PP/g Metallocen x h, erhalten.
VZ = 70 cm³/g, M_{w} = 61100 g/mol, M_{w}/Mₙ = 2,5, Schmp. = 152°C.

### Beispiele 14 und 15 und Vergleichsbeispiele 16 bis 18

In einem mit Stickstoff gespülten, trockenen 1,5-dm³-Reaktor wurden 0,75 dm³ eines Kohlenwasserstoffschnitts (Sdp. 100-120°C) vorgelegt und unter Rühren mit 3,75 cm³ toluolischer Methylaluminoxanlösung (entsprechend 5 mmol Al, mittlerer Oligomerisierungsgrad n = 20) versetzt.

0,125 mg Metallocen (Tabelle 1) wurden in 1,25 cm³ toluolischer Methylaluminoxanlösung (1,66 mmol Al) gelöst und durch 15 minütiges Stehenlassen voraktiviert. Der Reaktor wurde auf 70°C aufgeheizt, und es wurden unter Rühren 5 bar Ethylen aufgedrückt. Die Metallocenlösung wurde durch eine Druckschleuse zugegeben, der Reaktordruck durch ständige Zufuhr von Ethylengas konstant bei 5 bar und die Temperatur durch Thermostatisierung konstant bei 70°C gehalten.

Nach einer Stunde Polymerisationszeit unter Rühren wurde die Reaktion durch Zugabe von 5 ml Isopropanol gestoppt, der Reaktor entleert, das Polymerisat abfiltriert und im Vakuum getrocknet. Ergebnisse siehe Tabelle 1.

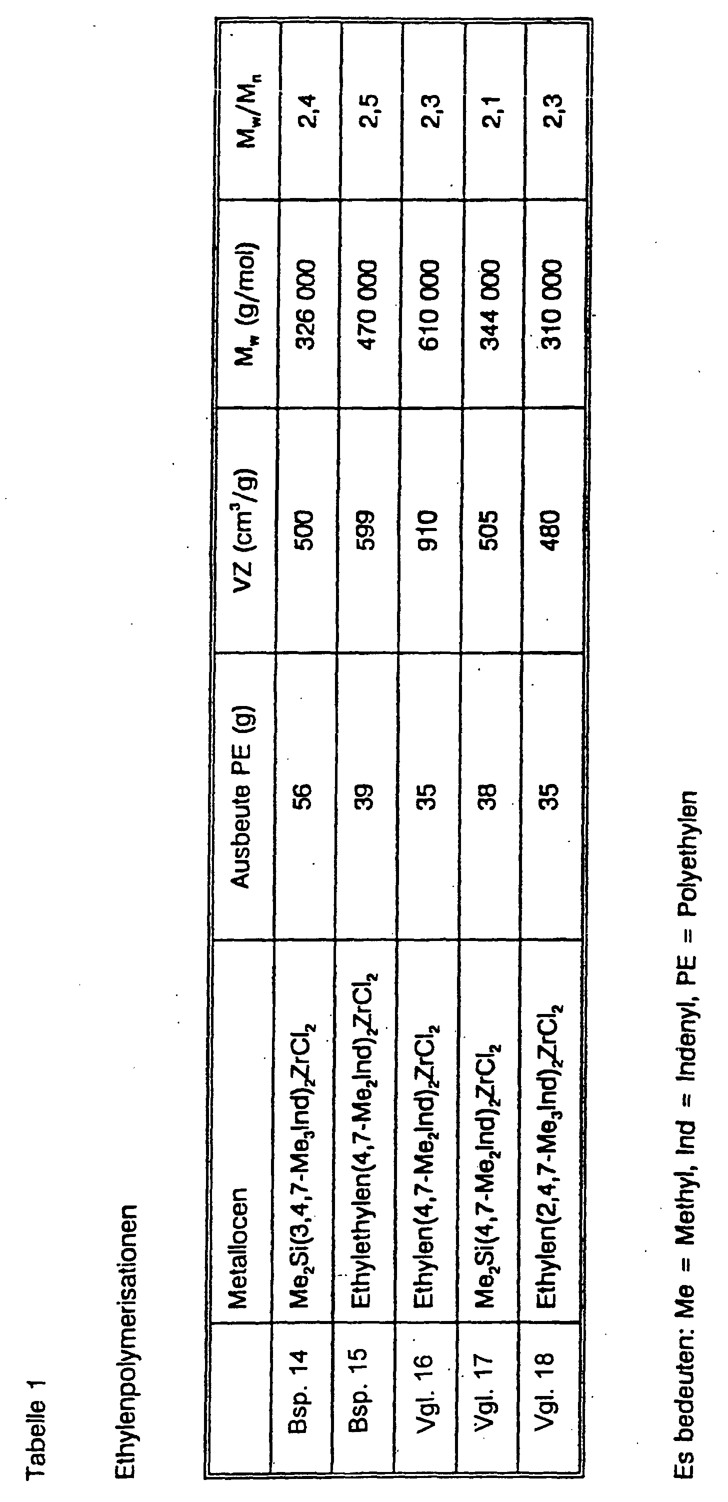

### Vergleichsbeispiel 19

Vergleichsbeispiel 1 wurde wiederholt, während der Polymerisation wurden jedoch kontinuierlich 50 g Ethylen zudosiert. Es wurden 1,44 kg C₂/C₃-Copolymer, entsprechend einer Metallocenaktivität von 145,5 kg Copolymer/g Metallocen x h, erhalten.
VZ = 30 cm³/g, M_{w} = 15600, M_{w}/Mₙ = 2,2, Schmp. 122°C.

Ethylengehalt 3,1 %, laut ¹³C-NMR isolierter Einbau der Ethylenbausteine. Durch Ethylen als Comonomer kann der Schmelzpunkt abgesenkt werden.

### Vergleichsbeispiel 20

Vergleichsbeispiel 1 wurde wiederholt, in den Reaktor wurden jedoch zusätzlich vor Zugabe des Propylens 16 Ndm³ Wasserstoff eindosiert. Es wurden 1,50 kg Polypropylen, entsprechend einer Metallocenaktivität von 151,5 kg Polymer/g Metallocen x h, erhalten.
VZ = 15 cm³/g, M_{w} = 9300 g/mol, M_{w}/Mₙ = 2,0, Schmp. = 132°C, SD = 520 g/dm³, II = 92 %.

## Patentansprüche

1. Verfahren zur Herstellung eines Olefinpolymers durch Polymerisation oder Copolymerisation eines Olefins der Formel R^{a}-CH =CH-R^{b}, worin R^{a} und R^{b} gleich oder verschieden sind und ein Wasserstoffatom oder einen Kohlenwasserstoffrest mit 1 bis 14 C-Atomen bedeuten, oder R^{a} und R^{b} mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einem Metallocen als Übergangsmetallverbindung und einem Cokatalysator gebildet wird, **dadurch gekennzeichnet, daß** das Metallocen eine Verbindung der Formel 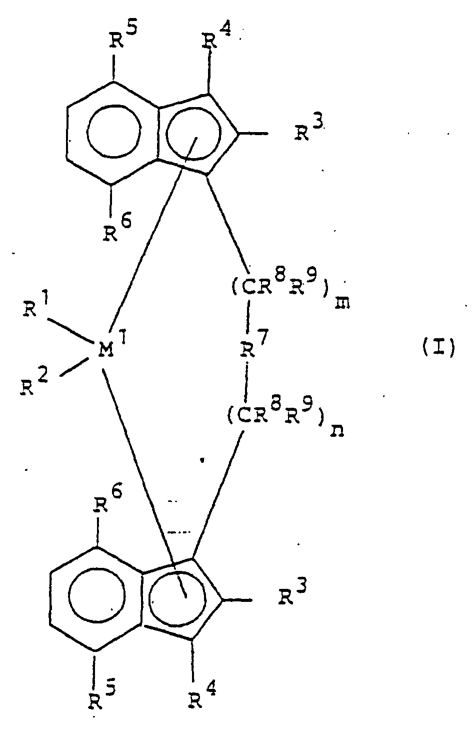 worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
R⁵ und R⁶ gleich oder verschieden sind und die für R³ und R⁴ genannte Bedeutung haben, mit der Maßgabe, daß R⁵ und R⁶ nicht Wasserstoff sind,
R⁷ 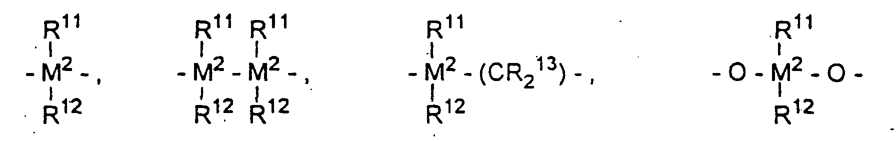 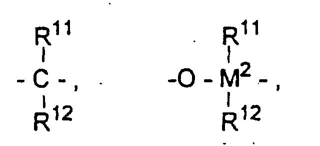
=BR¹¹, =AIR¹¹, -Ge-, -Sn-, -O-, -S-, =SO, =SO₂, =NR¹¹, =CO, =PR¹¹ oder =P(O)R¹¹ ist,
wobei
R¹¹, R¹² und R¹³ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M² Silizium, Germanium oder Zinn ist,
R⁸ gleich oder verschieden sind und ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten,
R⁹ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten, und
m und n gleich oder verschieden sind und null, 1 oder 2 sind, wobei m plus n null, 1 oder 2 ist, und
wobei die Metallocene
2,2-propyl bis(4,7-bis(dimethylamino)-1-indenyl)zirkondichlorid,
2,2-propyl bis(4,7-dimethyl)-1-indenyl)zirkondichlorid,
rac-Dimethylsilylbis(4,7-dimethylindenyl-1)zirkondichlorid,
rac-Dimethylsilylbis(2,4,7-trimethylindenyl-1 )zirkondichlorid und
rac-Dimethylsilylbis(2,4,7-trimethyl-4,5,6,7-tetrahydroindenyl-1)zirkondichlorid ausgenommen sind,
oder der Formel la ist, 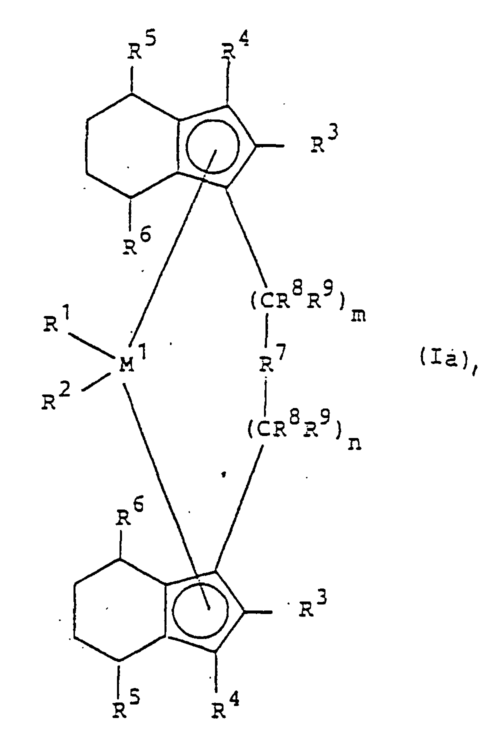 worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁰, -SR¹⁰, -OSiR₃¹⁰, -SiR₃¹⁰ oder - PR₂¹⁰-Rest bedeuten, worin R¹⁰ ein Halogenatom, eine C₁-C₁₀-Alkylgruppe oder eine C₆-C₁₀-Arylgruppe ist,
R⁵ und R⁶ gleich oder verschieden sind und die für R³ und R⁴ genannte Bedeutung haben, mit der Maßgabe, daß R⁵ und R⁶ nicht Wasserstoff sind,
R⁷ 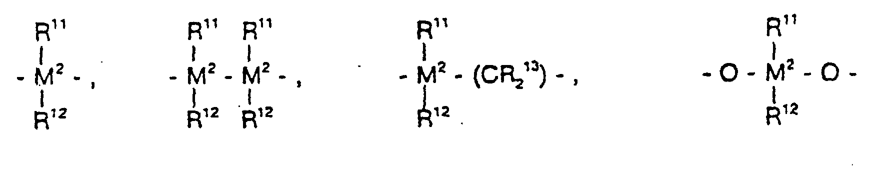 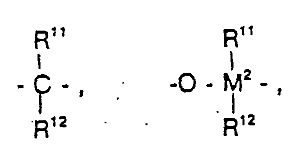
=BR¹¹, =AIR¹¹, -Ge-, -Sn-, -O-, -S-, =SO, =SO₂, =NR¹¹, =CO, =PR¹¹ oder =P(O)R¹¹ ist,
wobei
R¹¹, R¹² und R¹³ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M² Silizium, Germanium oder Zinn ist,
R⁸ und R⁹ gleich oder verschieden sind und die für R¹¹ genannte Bedeutung haben und
m und n gleich oder verschieden sind und null, 1 oder 2 sind, wobei m plus n null, 1 oder 2 ist.

2. Verfahren gemäß Anspruch 1, **dadurch gekennzeichnet, daß** in Formel I oder la M¹ Zr oder Hf, R¹ und R² gleich oder verschieden sind und (C₁-C₃)-Alkyl oder Chlor, R³ und R⁴ gleich oder verschieden sind und Wasserstoff oder (C₁-C₄)-Alkyl, R⁵ und R⁶ gleich oder verschieden sind und (C₁-C₄)-Alkyl, das halogeniert sein kann, R⁷ einen Rest 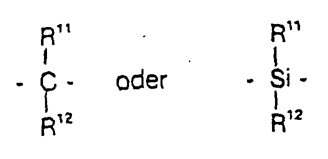 und m plus n null oder 1 bedeuten.

3. Verfahren gemäß Anspruch 1 oder 2, **dadurch gekennzeichnet, daß** in Formel I oder la die Substituenten R⁵ und R⁶ gleich sind.

4. Verfahren gemäß einem oder mehreren der Ansprüche 1 bis 3, **dadurch gekennzeichnet, daß** als Metallocen der Formel I oder la rac-[Dimethylsilylbis{1-(3,4,7-trimethylindenyl)}]zirkondichlorid oder rac-[1,2-Butandiylbis{1-(4,7-dimethyl-indenyl)}]zirkondichlorid verwendet wird.

5. Verfahren gemäß einem oder mehreren der Ansprüche 1 bis 4, **dadurch gekennzeichnet, daß** als Cokatalysator ein Aluminoxan der Formel (II) 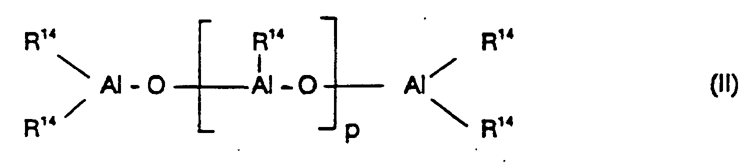 für den linearen Typ und/oder der Formel (III) 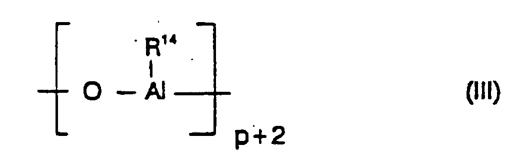 für den cyclischen Typ verwendet wird,
wobei in den Formeln (II) und (III) die Reste R¹⁴ gleich oder verschieden sind und eine C₁-C₆-Alkylgruppe, eine C₆-C₁₈-Arylgruppe, Benzyl oder Wasserstoff bedeuten und p eine ganze Zahl von 2 bis 50 ist.

6. Verfahren gemäß einem oder mehreren der Ansprüche 1 bis 5, **dadurch gekennzeichnet, daß** als Cokatalysator Methylaluminoxan verwendet wird.

7. Verfahren gemäß Anspruch 5 oder 6, **dadurch gekennzeichnet, daß** das Metallocen der Formel I oder la vor dem Einsatz in der Polymerisationsreaktion mit einem Aluminoxan der Formel II und/oder III voraktiviert wird.

8. Vewendung eines Metallocens der Formel I oder la gemäß einem oder mehreren der Ansprüche 1 bis 4 als Katalysator bei der Olefinpolymerisation.

9. Metallocen der Formel I 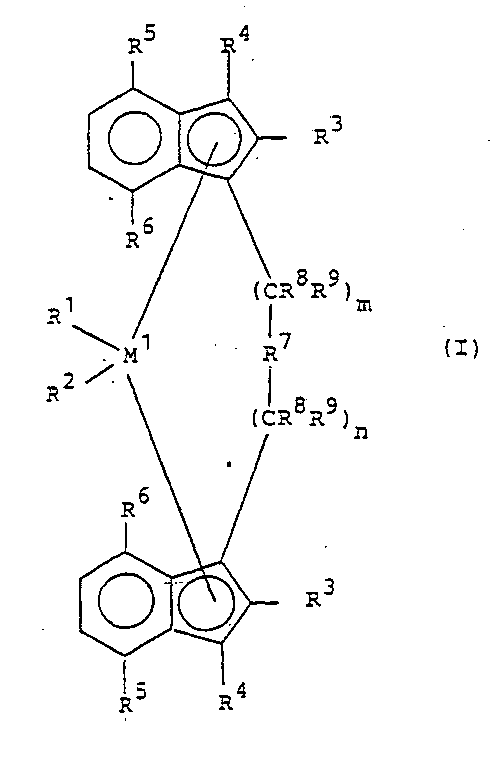 worin
M¹ ein Metall der Gruppe IVb, Vb oder Vlb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂¹⁰, -SR¹⁰, -OSiR₃¹⁰, -SiR₃¹⁰ oder -PR₂ ¹⁰-Rest bedeuten, worin R¹⁰ ein Halogenatom, eine C₁-C₁₀-Alkylgruppe oder eine C₆-C₁₀-Arylgruppe ist,
R⁵ und R⁶ gleich oder verschieden sind und die für R³ und R⁴ genannte Bedeutung haben, mit der Maßgabe, daß R⁵ und R⁶ nicht Wasserstoff sind,
R⁷ 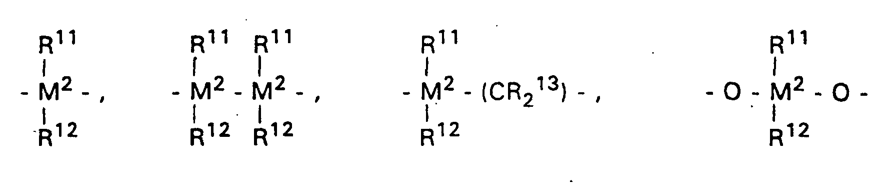 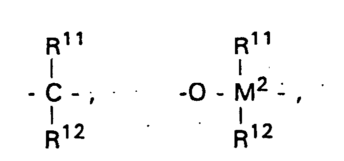
=BR¹¹, =AIR¹¹, -Ge-, -Sn-, -O-, -S-, =SO, =SO₂, =NR¹¹, =CO, =PR¹¹ oder =P(O)R¹¹ ist,
wobei
R¹¹, R¹² und R¹³ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M² Silizium, Germanium oder Zinn ist,
R⁸ gleich oder verschieden sind und ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten,
R⁹ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten, und
m und n gleich oder verschieden sind und null, 1 oder 2 sind, wobei m plus n null, 1 oder 2 ist, und
wobei die Metallocene
2,2-propyl bis(4,7-bis(dimethylamino)-1-indenyl)zirkondichlorid,
2,2-propyl bis(4,7-dimethyl)-1-indenyl)zirkondichlorid,
rac-Dimethylsilylbis(4,7-dimethylindenyl-1)zirkondichlorid,
rac-Dimethylsilylbis(2,4,7-trimethylindenyl-1)zirkondichlorid und
rac-Dimethylsilylbis(2,4,7-trimethyl-4,5,6,7-tetrahydroindenyl-1)zirkondichlorid
ausgenommen sind,
oder der Formel Ia, 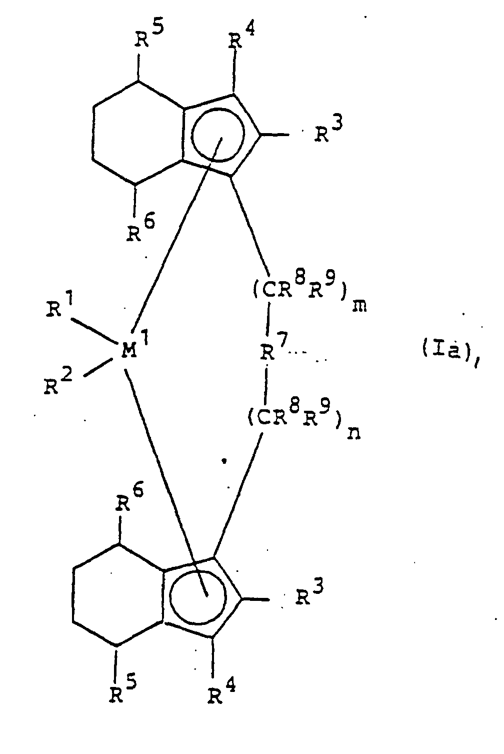 worin
M¹ ein Metall der Gruppe IVb, Vb oder VIb des Periodensystems ist,
R¹ und R² gleich oder verschieden sind und ein Wasserstoffatom, eine C₁-C₁₀-Alkylgruppe, eine C₁₋C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ und R⁴ gleich oder verschieden sind. und ein Wasserstoffatom, ein Halogenatom, eine C₁-C₁₀-Alkylgruppe, die halogeniert sein kann, eine C₆-C₁₀-Arylgruppe, einen -NR₂¹⁰, -SR¹⁰, -OSiR₃¹⁰, -SiR₃¹⁰ oder - PR₂¹⁰-Rest bedeuten, worin R¹⁰ ein Halogenatom, eine C₁-C₁₀-Alkylgruppe oder eine C₆-C₁₀-Arylgruppe ist,
R⁵ und R⁶ gleich oder verschieden sind und die für R³ und R⁴ genannte Bedeutung haben, mit der Maßgabe, daß R⁵ und R⁶ nicht Wasserstoff sind,
R⁷ 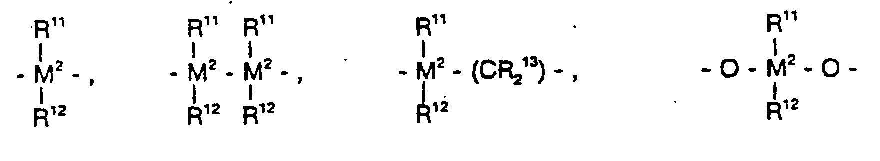 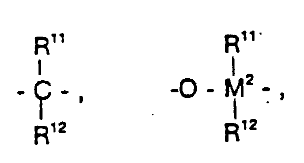
=BR¹¹, =AIR¹¹, -Ge-, -Sn-, -O-, -S-, =SO, =SO₂, =NR¹¹, =CO, =PR¹¹ oder =P(O)R¹¹ ist,
wobei
R¹¹, R¹² und R¹³ gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M² Silizium, Germanium oder Zinn ist,
R⁸ und R⁹ gleich oder verschieden sind und die für R¹¹ genannte Bedeutung haben und
m und n gleich oder verschieden sind und null, 1 oder 2 sind, wobei m plus n null, 1 oder 2 ist.

10. Metallocen gemäß Anspruch 9, **dadurch gekennzeichnet, daß** in Formel I oder la M¹ Zr oder Hf, R¹ und R² gleich oder verschieden sind und (C₁-C₃)-Alkyl oder Chlor, R³ und R⁴ gleich oder verschieden sind und Wasserstoff oder (C₁-C₄)-Alkyl, R⁵ und R⁶ gleich oder verschieden sind und (C₁-C₄)-Alkyl, das halogeniert sein kann, R⁷ einen Rest 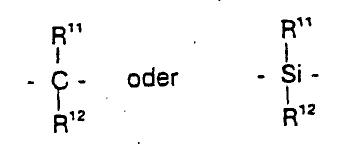 und m plus n null oder 1 bedeuten.

11. Metallocen gemäß Anspruch 9 oder 10, **dadurch gekennzeichnet, daß** in Formel 1 oder la die Substituenten R⁵ und R⁶ gleich sind.

12. rac-[Dimethylsilylbis{1-(3,4,7-trimethylindenyl)}]zirkondichlorid, rac-[1,2-Butandiylbis{1-(4,7-dimethyl-indenyl)}]zirkondichlorid.

13. Katalysator, welcher aus einem Metallocen gemäß einem oder mehreren der Ansprüche 9 bis 12 und einem Cokatalysator gebildet wird.

14. Katalysator gemäß Anspruch 13. worin als Cokatalysator ein Aluminoxan der Formel (II) 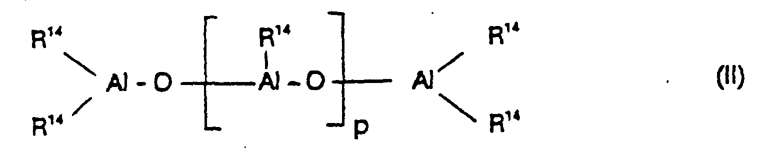 für den linearen Typ und/oder der Formel (III) 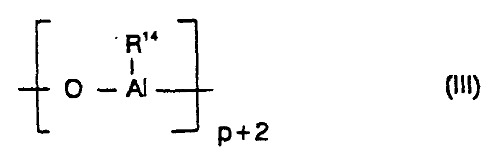 für den cyclischen Typ verwendet wird,
wobei in den Formeln (II) und (III) die Reste R¹⁴ gleich oder verschieden sind und eine C₁-C₆-Alkylgruppe, eine C₆-C₁₈-Arylgruppe, Benzyl oder Wasserstoff bedeuten und p eine ganze Zahl von 2 bis 50 ist.

15. Katalysator gemäß Anspruch 13 oder 14, worin als Cokatalysator Methylalumoxan verwendet wird.

16. Katalysator gemäß einem oder mehreren der Ansprüche 13 bis 15, worin das Metallocen auf einen Träger aufgebracht ist und wobei die Metallocene Dimethylsilylbis(2,4,7-trimethylindenyl-1)zirkondichlorid und Dimethylsilylbis(2,4,7-trimethyl-4,5,6,7-tetrahydroindenyl-1)zirkondichlorid nicht ausgenommen sind.

17. Katalysator, welcher aus einem Metallocen gemäß einem oder mehreren der Ansprüche 9 bis 12 und einem Cokatalysator gebildet wird, wobei als Cokatalysator eine Verbindung oder mehrere Verbindungen der Formeln RₓNH₄₋ₓBR'₄, RₓPH₄₋ₓBR'₄, R₃CBR'₄ oder BR'₃,
worin
x eine Zahl von 1 bis 4 bedeutet,
R gleich oder verschieden sind und C₁-C₁₀-Alkyl oder C₆-C₁₈-Aryl bedeuten oder 2 Reste R zusammen mit dem sie verbindenden Atom einen Ring bilden und
R' gleich oder verschieden sind und für C₆-C₁₈-Aryl, das durch Alkyl, Haloalkyl oder Fluor substituiert sein kann, steht,
oder Mischungen dieser Verbindungen mit Aluminoxan verwendet wird und wobei die Metallocene
2,2-propyl bis(4,7-bis(dimethylamino)-1-indenyl)zirkondichlorid,
2,2-propyl bis(4,7-dimethyl)-1-indenyl)zirkondichlorid,
Dimethylsilyibis(2,4,7-trimethylindenyf-1)zirkondichlorid und
Dimethylsilylbis(2,4,7-trimethyl-4,5,6,7-tetrahydroindenyl-1)zirkondichlorid nicht ausgenommen sind.

18. Katalysator gemäß Anspruch 17, wobei das Metallocen auf einen Träger aufgebracht ist.

19. Katalysator gemäß einem oder mehreren der Ansprüche 13 bis 18, worin das Metallocen vorpolymerisiert ist.

20. Verfahren zur Herstellung eine Olefinpolymers durch Polymerisation oder Copolymerisation eines Olefins der Formel R^{a}-CH=CH-R^{b}, worin R^{a} und R^{b} gleich oder verschieden sind und ein Wasserstoffatom oder einen Kohlenwasserstoffrest mit 1 bis 14 C-Atomen bedeuten, oder R^{a} und R^{b} mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, **dadurch gekennzeichnet, daß** man einen Katalysator gemäß Anspruch 17 bis 19 verwendet.

## Claims

1. A process for the preparation of an olefin polymer by polymerization or copolymerization of an olefin of the formula R^{a}-CH=CH-R^{b}, in which R^{a} and R^{b} are identical or different and are a hydrogen atom or a hydrocarbon radical having 1 to 14 carbon atoms, or R^{a} and R^{b}, together with the atoms joining them, can form a ring, at a temperature of -60 to 200°C, under a pressure of 0.5 to 100 bar, in solution, in suspension or in the gas phase, in the presence of a catalyst which is formed from a metallocene as the transition metal compound and a cocatalyst, wherein the metallocene is a compound of the formula I 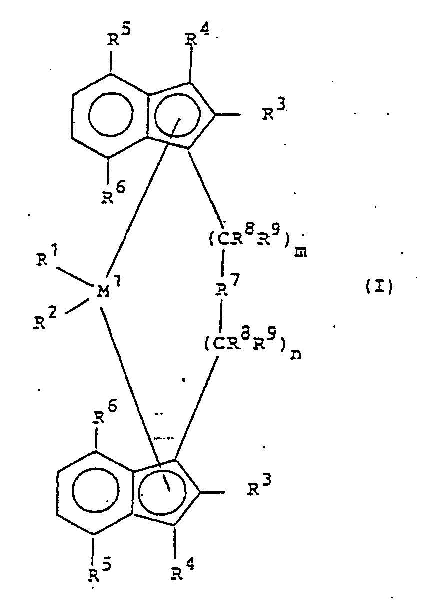 in which
M¹ is a metal of group IVb, Vb or VIb of the periodic table,
R¹ and R² are identical or different and are a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ and R⁴ are identical or different and are a hydrogen atom, a halogen atom, a C₁-C₁₀-alkyl group, which can be halogenated, a C₆-C₁₀-aryl group or an -NR₂¹⁰, -SR¹⁰, -OSiR₃¹⁰, -SiR₃¹⁰ or -PR₂¹⁰ radical, in which R¹⁰ is a halogen atom, a C₁-C₁₀-alkyl group or a C₆-C₁₀-aryl group,
R⁵ and R⁶ are identical or different and have the meaning given for R³ and R⁴, with the proviso that R⁵ and R⁶ are not hydrogen,
R⁷ is 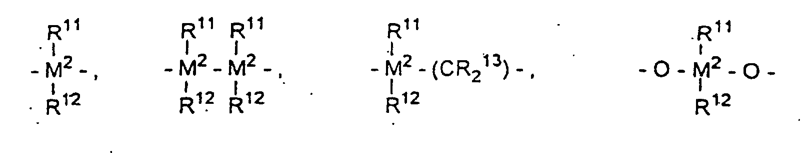 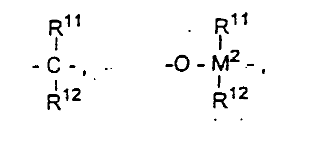
=BR¹¹, =AlR¹¹, -Ge-, -Sn-, -O-, -S-, =SO, =SO₂, =NR¹¹, =CO, =PR¹¹ or P(O)R¹¹,
in which
R¹¹, R¹² and R¹³ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹¹ and R¹² or R¹¹ and R¹³, in each case with the atoms joining them, form a ring, and
M² is silicon, germanium or tin,
R⁸ radicals are identical or different and are a halogen atom, a C₁-C₁₀-alkyl group, C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group,
R⁹ radicals are identical or different and are a hydrogen atom, a halogen atom, a C₁-C₁₀-alkyl group, C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, and
m and n are identical or different and are zero, 1 or 2, m plus n being zero, 1 or 2, and
with the exception of the metallocenes
2,2-propylbis(4,7-bis(dimethylamino)-1-indenyl)-zirconium dichloride,
2,2-propylbis(4,7-dimethyl)-1-indenyl)zirconium dichloride,
rac-dimethylsilylbis(4,7-dimethylinden-1-yl)-zirconium dichloride,
rac-dimethylsilylbis(2,4,7-trimethylinden-1-yl)-zirconium dichloride and
rac-dimethylsilylbis(2,4,7-trimethyl-4,5,6,7-tetrahydroinden-1-yl)zirconium dichloride,
or of the formula Ia 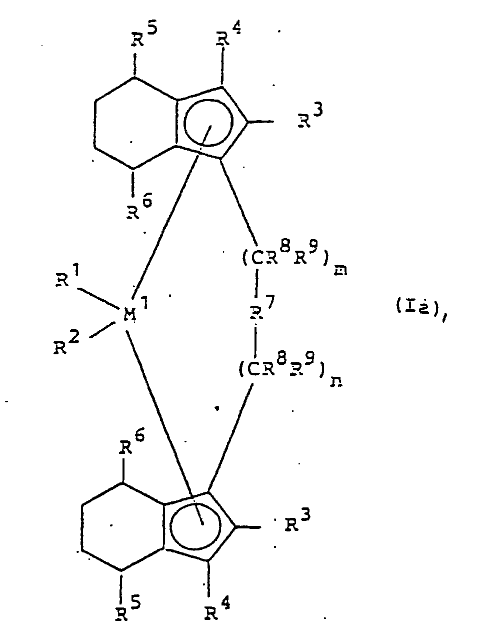 in which
M¹ is a metal of group IVb, Vb or VIb of the periodic table,
R¹ and R² are identical or different and are a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ and R⁴ are identical or different and are a hydrogen atom, a halogen atom, a C₁-C₁₀-alkyl group, which can be halogenated, a C₆-C₁₀-aryl group or an -NR₂¹⁰, -SR¹⁰, -OSiR₃¹⁰, -SiR₃¹⁰ or -PR₂¹⁰ radical, in which R¹⁰ is a halogen atom, a C₁-C₁₀-alkyl group or a C₆-C₁₀-aryl group,
R⁵ and R⁶ are identical or different and have the meaning given for R³ and R⁴, with the proviso that R⁵ and R⁶ are not hydrogen,
R⁷ is 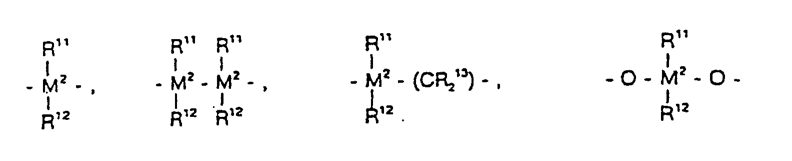 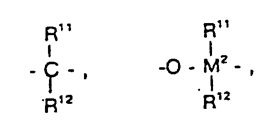
=BR¹¹, =AlR¹¹, -Ge-, -Sn-, -O-, -S-, =SO, =SO₂, =NR¹¹, =CO, =PR¹¹ or P(O)R¹¹,
in which
R¹¹, R¹² and R¹³ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹¹ and R¹² or R¹¹ and R¹³, in each case with the atoms joining them, form a ring, and
M² is silicon, germanium or tin,
R⁸ and R⁹ are identical or different and have the meaning given for R¹¹ and
m and n are identical or different and are zero, 1 or 2, m plus n being zero, 1 or 2.

2. The process as claimed in claim 1, wherein, in formula I or Ia, M¹ is Zr or Hf, R¹ and R² are identical or different and are (C₁-C₃)-alkyl or chlorine, R³ and R⁴ are identical or different and are hydrogen or (C₁-C₄)-alkyl, R⁵ and R⁶ are identical or different and are (C₁-C₄)-alkyl, which can be halogenated, R⁷ is a radical 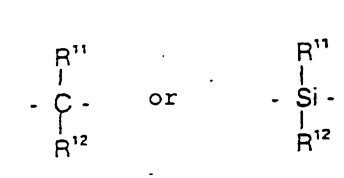 and m plus n is zero or 1.

3. The process as claimed in claim 1 or 2, wherein, in formula I or Ia, the substituents R⁵ and R⁶ are identical.

4. The process as claimed in one or more of claims 1 to 3, wherein
rac-[dimethylsilylbis{1-(3,4,7-trimethylindenyl)}]-zirconium dichloride or
rac-[1,2-butanediylbis{1-(4,7-dimethylindenyl)}]-zirconium dichloride
is used as the metallocene of the formula I or Ia.

5. The process as claimed in one or more of claims 1 to 4, wherein an aluminoxane of the formula (II) 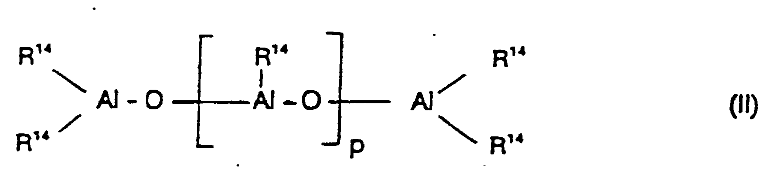 for the linear type, and/or of the formula (III) 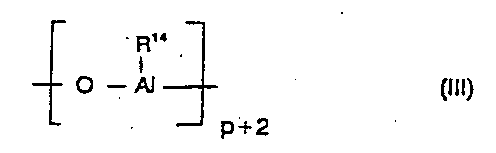 for the cyclic type, in which, in the formulae (II) and (III), the radicals R¹⁴ are identical or different and are a C₁-C₆-alkyl group, a C₆-C₁₈-aryl group, benzyl or hydrogen and p is an integer from 2 to 50, is used as the cocatalyst.

6. The process as claimed in one or more of claims 1 to 5, wherein methylaluminoxane is used as the cocatalyst.

7. The process as claimed in claim 5 or 6, wherein the metallocene of the formula I or Ia is preactivated with an aluminoxane of the formula II and/or III before use in the polymerization reaction.

8. The use of a metallocene of the formula I or Ia as claimed in one or more of claims 1 to 4 as a catalyst in olefin polymerization.

9. A metallocene of the formula I 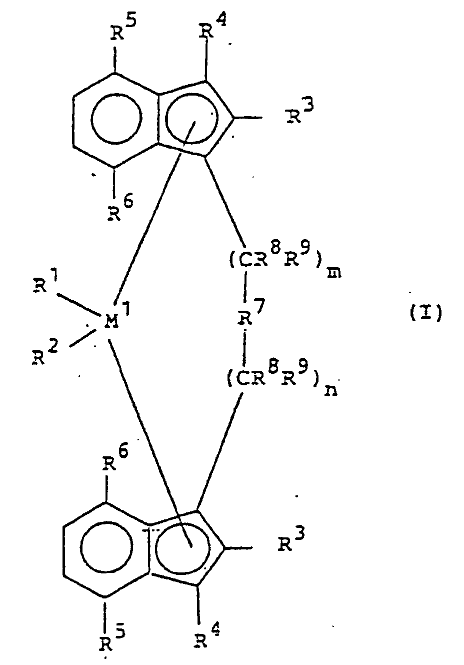 in which
M¹ is a metal of group IVb, Vb or VIb of the periodic table,
R¹ and R² are identical or different and are a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ and R⁴ are identical or different and are a hydrogen atom, a halogen atom, a C₁-C₁₀-alkyl group, which can be halogenated, a C₆-C₁₀-aryl group or an -NR₂¹⁰, -SR¹⁰, -OSiR₃¹⁰, -SiR₃¹⁰ or -PR₂¹⁰ radical, in which R¹⁰ is a halogen atom, a C₁-C₁₀-alkyl group or a C₆-C₁₀-aryl group,
R⁵ and R⁶ are identical or different and have the meaning given for R³ and R⁴, with the proviso that R⁵ and R⁶ are not hydrogen,
R⁷ is 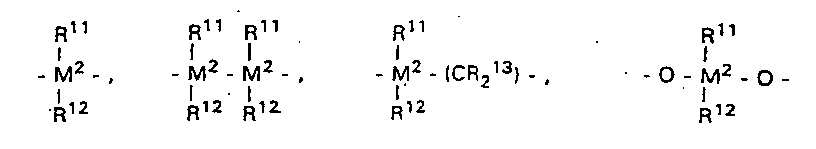 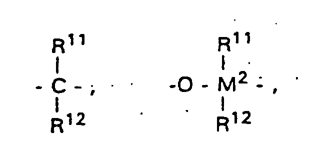
=BR¹¹, =AlR¹¹, -Ge-, -Sn-, -O-, -S-, =SO, =SO₂, =NR¹¹, =CO, =PR¹¹ or P(O)R¹¹,
in which
R¹¹, R¹² and R¹³ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹¹ and R¹² or R¹¹ and R¹³, in each case with the atoms joining them, form a ring, and
M² is silicon, germanium or tin,
R⁸ radicals are identical or different and are a halogen atom, a C₁-C₁₀-alkyl group, C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group,
R⁹ radicals are identical or different and are a hydrogen atom, a halogen atom, a C₁-C₁₀-alkyl group, C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, and
m and n are identical or different and are zero, 1 or 2, m plus n being zero, 1 or 2, and
with the exception of the metallocenes 2,2-propylbis(4,7-bis(dimethylamino)-1-indenyl)-zirconium dichloride,
2,2-propylbis(4,7-dimethyl)-1-indenyl)zirconium dichloride,
rac-dimethylsilylbis(4,7-dimethylinden-1-yl)-zirconium dichloride,
rac-dimethylsilylbis(2,4,7-trimethylinden-1-yl)-zirconium dichloride and
rac-dimethylsilylbis(2,4,7-trimethyl-4,5,6,7-tetrahydroinden-1-yl)zirconium dichloride,
or of the formula Ia 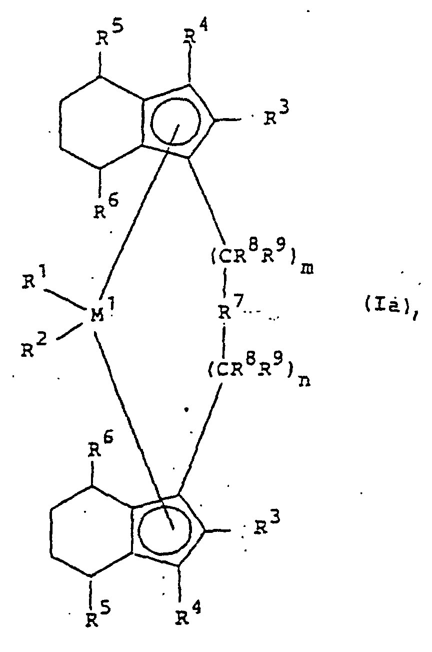 in which
M¹ is a metal of group IVb, Vb or VIb of the periodic table,
R¹ and R² are identical or different and are a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ and R⁴ are identical or different and are a hydrogen atom, a halogen atom, a C₁-C₁₀-alkyl group, which can be halogenated, a C₆-C₁₀-aryl group or an -NR₂¹⁰, -SR¹⁰, -OSiR₃¹⁰, -SiR₃¹⁰ or - PR₂¹⁰ radical, in which R¹⁰ is a halogen atom, a C₁-C₁₀-alkyl group or a C₆-C₁₀-aryl group,
R⁵ and R⁶ are identical or different and have the meaning given for R³ and R⁴, with the proviso that R⁵ and R⁶ are not hydrogen,
R⁷ is 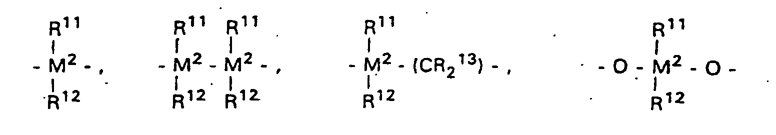 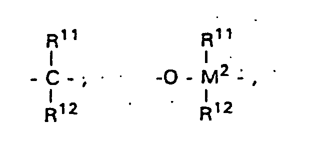
=BR¹¹, =AlR¹¹, -Ge-, -Sn-, -O-, -S-, =SO, =SO₂, =NR¹¹, =CO, =PR¹¹ or P(O)R¹¹,
in which
R¹¹, R¹² and R¹³ are identical or different and are a hydrogen atom, a halogen atom, a C₁-C₁₀-alkyl group, a C₁-C₁₀-fluoroalkyl group, a C₆-C₁₀-aryl group, a C₆-C₁₀-fluoroaryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R¹¹ and R¹² or R¹¹ and R¹³, in each case with the atoms joining them, form a ring, and
M² is silicon, germanium or tin,
R⁸ and R⁹ are identical or different and have the meaning given for R¹¹ and
m and n are identical or different and are zero, 1 or 2, m plus n being zero, 1 or 2.

10. The metallocene as claimed in claim 9, wherein, in formula I or Ia, M¹ is Zr or Hf, R¹ and R² are identical or different and are (C₁-C₃)-alkyl or chlorine, R³ and R⁴ are identical or different and are hydrogen or (C₁-C₄)-alkyl, R⁵ and R⁶ are identical or different and are (C₁-C₄)-alkyl, which can be halogenated, R⁷ is a radical 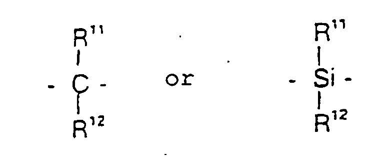 and m plus n is zero or 1.

11. The metallocene as claimed in claim 9 or 10, wherein, in formula I or Ia, the substituents R⁵ and R⁶ are identical.

12. rac-[Dimethylsilylbis{1-(3,4,7-trimethylindenyl)}]-zirconium dichloride,
rac-[1,2-butanediylbis{1-(4,7-dimethylindenyl)}]-zirconium dichloride.

13. A catalyst formed from a metallocene as claimed in one or more of claims 9 to 12 and a cocatalyst.

14. The catalyst as claimed in claim 13, wherein an aluminoxane of the formula (II) 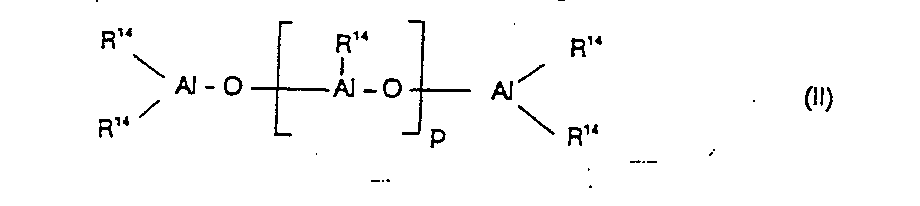 for the linear type, and/or of the formula (III) 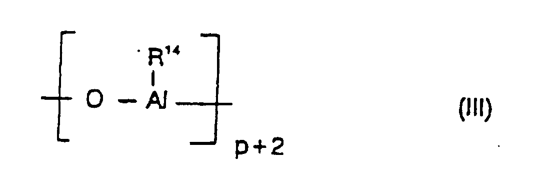 for the cyclic type, in which, in the formulae (II) and (III), the radicals R¹⁴ are identical or different and are a C₁-C₆-alkyl group, a C₆-C₁₈-aryl group, benzyl or hydrogen and p is an integer from 2 to 50, is used as the cocatalyst.

15. The catalyst as claimed in claim 13 or 14, wherein methylaluminoxane is used as the cocatalyst.

16. The catalyst as claimed in one or more of claims 13 to 15, wherein the metallocene has been applied to a support and in which case the metallocenes dimethylsilylbis(2,4,7-trimethylinden-1-yl)-zirconium dichloride and dimethylsilylbis(2,4,7-trimethyl-4,5,6,7-tetrahydroinden-1-yl)zirconium dichloride are not excepted.

17. A catalyst formed from a metallocene as claimed in one or more of claims 9 to 12 and a cocatalyst, where as cocatalyst a compound or plurality of compounds of the formulae RₓNH₄₋ₓBR'₄, RₓPH₄₋ₓBR'₄, R₃CBR'₄ or BR'₃,
in which
x is a number from 1 to 4,
R radicals are identical or different and are C₁-C₁₀-alkyl or C₆-C₁₈-aryl or 2 radicals R together with the atom connecting them form a ring and
R' radicals are identical or different and are C₆-C₁₈-aryl which can be substituted by alkyl, haloalkyl or fluorine,
or mixtures of these compounds with aluminoxane and where the metallocenes
2,2-propylbis(4,7-bis(dimethylamino)-1-indenyl)-zirconium dichloride,
2,2-propylbis(4,7-dimethyl)-1-indenyl)zirconium dichloride,
dimethylsilylbis(2,4,7-trimethylinden-1-yl)-zirconium dichloride and
dimethylsilylbis(2,4,7-trimethyl-4,5,6,7-tetrahydroinden-1-yl)zirconium dichloride
are not excepted.

18. The catalyst as claimed in claim 17, wherein the metallocene has been applied to a support.

19. The catalyst as claimed in one or more of claims 13 to 18, wherein the metallocene has been prepolymerized.

20. A process for the preparation of an olefin polymer by polymerization or copolymerization of an olefin of the formula R^{a}-CH=CH-R^{b}, in which R^{a} and R^{b} are identical or different and are a hydrogen atom or a hydrocarbon radical having 1 to 14 carbon atoms, or R^{a} and R^{b}, with the atoms connecting them, can form a ring, at a temperature of -60 to 200°C, at a pressure of 0.5 to 100 bar, in solution, in suspension or in the gas phase, in the presence of a catalyst, which comprises using a catalyst as claimed in claim 17 to 19.

## Revendications

1. Procédé pour la fabrication d'un polymère d'oléfine par polymérisation ou copolymérisation d'une oléfine de formule R^{a}-CH=CH-R^{b}, dans laquelle R^{a} et R^{b} sont identiques ou différents et représentent un atome d'hydrogène ou un reste hydrocarboné avec 1 à 14 atomes de carbone, ou R^{a} et R^{b} peuvent former avec les atomes auxquels ils sont liés un noyau, à une température de -60 à 200°C, sous une pression de 0,5 à 100 bars, dans une solution, dans une suspension ou dans une phase gazeuse, en présence d'un catalyseur, qui est formé à partir d'un métallocène comme composé de métal de transition et d'un cocatalyseur, **caractérisé en ce que** le métallocène représente un composé de formule I 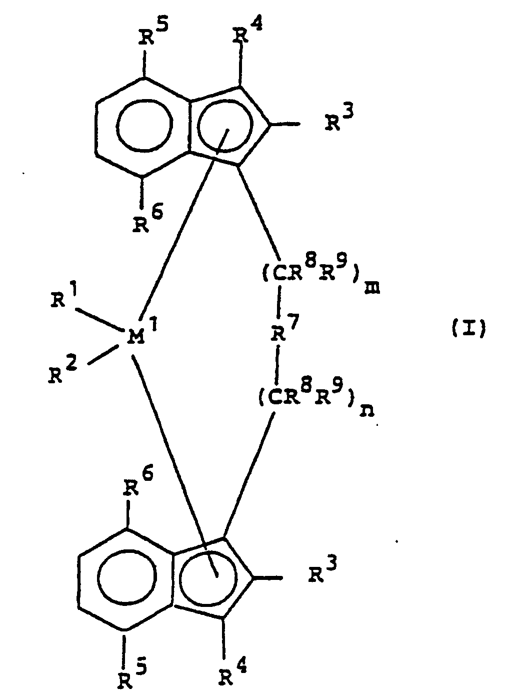 dans laquelle
M¹ représente un métal des groupes IVb, Vb ou VIb du système périodique,
R¹ et R² sont identiques ou différents et représentent un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène ;
R³ et R⁴ sont identiques ou différents et représentent un atome d'hydrogène, un atome d'halogène, un groupe alkyle en C₁-C₁₀ qui peut être halogéné, un groupe aryle en C₆-C₁₀, un reste -NR₂¹⁰, -SR¹⁰, -OSiR₃¹⁰, -SiR₃¹⁰ ou -PR₂¹⁰, dans lesquels R¹⁰ représente un atome d'halogène, un groupe alkyle en C₁-C₁₀ ou un groupe aryle en C₆-C₁₀,
R⁵ et R⁶ sont identiques ou différents et ont la signification désignée pour R³ et R⁴, à condition que R⁵ et R⁶ ne représentent pas un atome d'hydrogène,
R⁷ 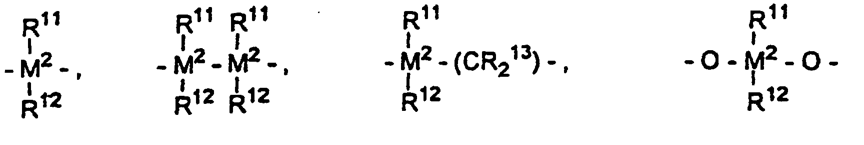 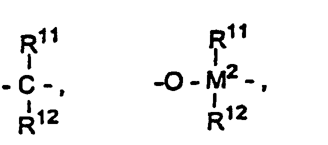 =BR¹¹, =AIR¹¹, -Ge-, -Sn-, -O-, -S-, =SO, =SO₂, =NR¹¹, =CO, =PR¹¹ ou =P(O)R¹¹,
dans laquelle
R¹¹, R¹² et R¹³ sont identiques ou différents et représentent un atome d'hydrogène, un atome d'halogène, un groupe alkyle en C₁-C₁₀, un groupe fluoroalkyle en C₁-C₁₀, un groupe aryle en C₆-C₁₀, un groupe fluoroaryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀, un groupe alkylaryle en C₇-C₄₀ ou R¹¹ et R¹² ou R¹¹ et R¹³ forment à chaque fois avec les atomes auxquels ils sont liés un noyau,
M² représente du silicium, du germanium ou de l'étain,
R⁸ est identique ou différent et représente un atome d'halogène, un groupe alkyle en C₁-C₁₀, un groupe fluoroalkyle en C₁-C₁₀, un groupe aryle en C₆-C₁₀, un groupe fluoroaryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀,
R⁹ est identique ou différent et représente un atome d'hydrogène, un atome d'halogène, un groupe alkyle en C₁-C₁₀, un groupe fluoroalkyle en C₁-C₁₀, un groupe aryle en C₆-C₁₀, un groupe fluoroaryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀,
et
m et n sont identiques ou différents et valent 0, 1 ou 2, m plus n valant 0, 1 ou 2, et
dans lesquels les métallocènes
dichlorure de 2,2-propyl bis(4,7-bis(diméthylamino)-1-indényl)zircone,
dichlorure de 2,2-propyl bis(4,7-diméthyl)-1-indényl)zircone,
dichlorure de rac-diméthylsilylbis(4,7-diméthylindényl-1)zircone,
dichlorure de rac-diméthylsilylbis(2,4,7-triméthylindényl-1)zircone et
dichlorure de rac-diméthylsilylbis(2,4,7-triméthyl-4,5,6,7-tétrahydroindényl-1)zircone sont exclus,
ou représente la formule Ia 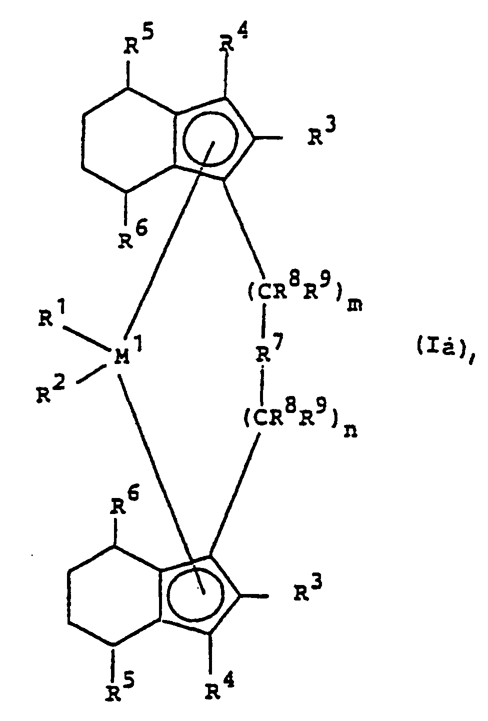 dans laquelle
M¹ représente un métal des groupes IVb, Vb ou VIb du système périodique,
R¹ et R² sont identiques ou différents et représentent un atome d'hydrogène, un groupe alkyle en C₁-C₁₀, un groupe alcoxy en C₁-C₁₀, un groupe aryle en C₆₋C₁₀, un groupe aryloxy en C₆₋C₁₀, un groupe alcényle en C₂-C₁₀, un groupe arylakyle en C₇-C₄₀, un groupe alkylaryle en C₇-C₄₀, un groupe arylalcényle en C₈-C₄₀ ou un atome d'halogène,
R³ et R⁴ sont identiques ou différents et représentent un atome d'hydrogène, un atome d'halogène, un groupe alkyle en C₁-C₁₀ qui peut être halogéné, un groupe aryle en C₆-C₁₀, un reste -NR₂¹⁰, -SR¹⁰, -OSiR₃¹⁰, -SiR₃¹⁰ ou - PR₂¹⁰, dans lequel R¹⁰ représente un atome d'halogène, un groupe alkyle en C₁-C₁₀ ou un groupe aryle en C₆-C₁₀,
R⁵ et R⁶ sont identiques ou différents et ont la la signification désignée pour R³ et R⁴, à condition que R⁵ et R⁶ ne représentent pas un atome d'hydrogène,
R⁷ 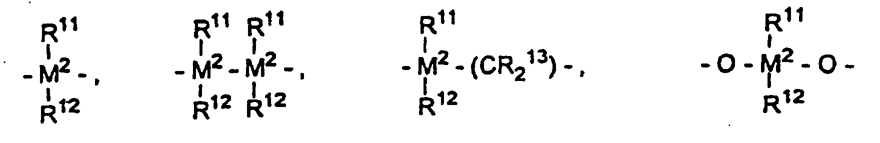 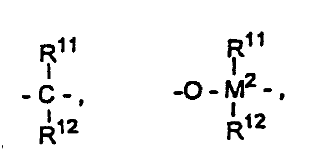 =BR¹¹, =AIR¹¹, -Ge-, -Sn-, -O-, -S-, =SO, =SO₂, =NR¹¹, =CO, =PR¹¹ ou =P(O)R¹¹,
dans laquelle
R¹¹, R¹² et R¹³ sont identiques ou différents et représentent un atome d'hydrogène, un atome d'halogène, un groupe alkyle en C₁-C₁₀, un groupe fluoroalkyle en C₁-C₁₀, un groupe aryle en C₆-C₁₀, un groupe fluoroaryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀, un groupe alkylaryle en C₇-C₄₀ ou R¹¹ et R¹² ou R¹¹ et R¹³ forment à chaque fois avec les atomes auxquels ils sont liés un noyau,
M² représente du silicium, du germanium ou de l'étain,
R⁸ et R⁹ sont identiques ou différents et ont la signification désignée pour R¹¹ et
m et n sont identiques ou différents et valent 0, 1 ou 2, m plus n valant 0, 1 ou 2.

2. Procédé selon la revendication 1, **caractérisé en ce que** dans la formule I ou Ia, M¹ représente Zr ou Hf, R¹ et R² sont identiques ou différents et représentent un groupe alkyle en C₁-C₃ ou un atome de chlore, R³ et R⁴ sont identiques ou différents et représentent un atome d'hydrogène ou un groupe alkyle en C₁₋C₄, R⁵ et R⁶ sont identiques ou différents et représentent un groupe alkyle en C₁-C₄ qui peut être halogéné, R⁷ représente un reste 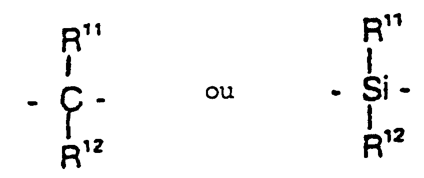 et m plus n valent 0 ou 1.

3. Procédé selon la revendication 1 ou 2, **caractérisé en ce que** dans la formule I ou Ia, les substituants R⁵ et R⁶ sont identiques.

4. Procédé selon l'une quelconque ou plusieurs des revendications 1 à 3, **caractérisé en ce que** comme métallocène de formule I ou Ia, on utilise un dichlorure de rac-[diméthylsilylbis{1-(3,4,7-triméthylindényl)}]zircone ou un dichlorure de rac-[1,2-butanediylbis{1-(4,7-diméthylindényl)}]zircone.

5. Procédé selon l'une quelconque ou plusieurs des revendications 1 à 4, **caractérisé en ce que** comme cocatalyseur, on utilise un aluminoxane de formule (II) 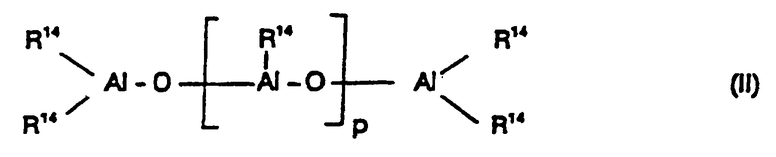 pour le type linéaire et/ou de formule (III) 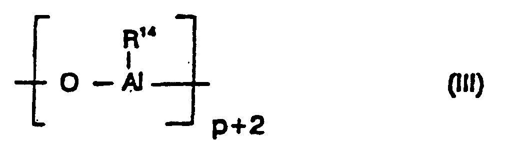 pour le type cyclique,
dans lesquels dans les formules (II) et (III), les restes R¹⁴ sont identiques ou différents et représentent un groupe alkyle en C₁-C₆, un groupe aryle en C₆-C₁₈, un groupe benzyle ou un atome d'hydrogène et p est un nombre entier de 2 à 50.

6. Procédé selon l'une quelconque des revendications 1 à 5, **caractérisé en ce que** comme cocatalyseur, on utilise l'aluminoxane de méthyle.

7. Procédé selon la revendication 5 ou 6, **caractérisé en ce que** le métallocène de formule I ou Ia avant l'utilisation dans la réaction de polymérisation est préactivé à l'aide d'un aluminoxane de formule II et/ou III.

8. Utilisation de métallocène de formule I ou Ia selon l'une quelconque ou plusieurs des revendications 1 à 4 comme catalyseur lors de la polymérisation d'oléfine.

9. Métallocène de formule I 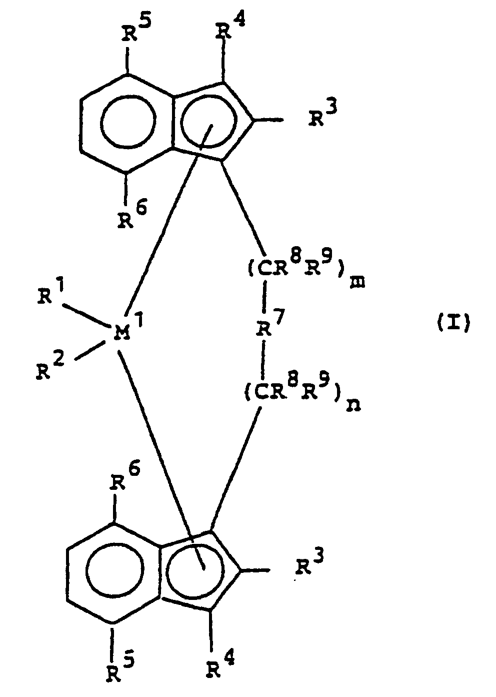 dans laquelle
M¹ représente un métal dés groupes IVb, Vb ou VIb du système périodique,
R¹ et R² sont identiques ou différents et représentent un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène ;
R³ et R⁴ sont identiques ou différents et représentent un atome d'hydrogène, un atome d'halogène, un groupe alkyle en C₁-C₁₀ qui peut être halogéné, un groupe aryle en C₆-C₁₀, un reste -NR₂¹⁰, -SR¹⁰, -OSiR₃¹⁰, -SiR₃¹⁰ ou - PR₂¹⁰, dans lesquels R¹⁰ représente un atome d'halogène, un groupe alkyle en C₁-C₁₀ ou un groupe aryle en C₆-C₁₀,
R⁵ et R⁶ sont identiques ou différents et ont la signification désignée pour R³ et R⁴, à condition que R⁵ et R⁶ ne représentent pas un atome d'hydrogène,
R⁷ 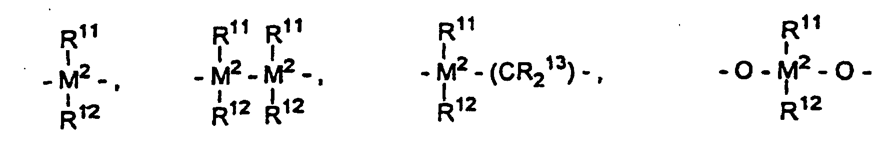 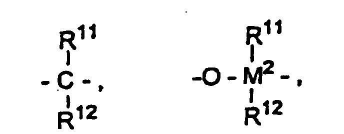 =BR¹¹, =AIR¹¹, -Ge-, -Sn-, -O-, -S-, =SO, =SO₂, =NR¹¹, =CO, =PR¹¹ ou =P(O)R¹¹,
dans laquelle
R¹¹, R¹² et R¹³ sont identiques ou différents et représentent un atome d'hydrogène, un atome d'halogène, un groupe alkyle en C₁-C₁₀, un groupe fluoroalkyle en C₁-C₁₀, un groupe aryle en C₆-C₁₀, un groupe fluoroaryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀, un groupe alkylaryle en C₇-C₄₀ ou R¹¹ et R¹² ou R¹¹ et R¹³ forment à chaque fois avec les atomes auxquels ils sont liés un noyau,
M² représente du silicium, du germanium ou de l'étain,
R⁸ est identique ou différent et représente un atome d'halogène, un groupe alkyle en C₁-C₁₀, un groupe fluoroalkyle en C₁-C₁₀, un groupe aryle en C₆-C₁₀, un groupe fluoroaryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀,
R⁹ est identique ou différent et représente un atome d'hydrogène, un atome d'halogène, un groupe alkyle en C₁-C₁₀, un groupe fluoroalkyle en C₁-C₁₀, un groupe aryle en C₆-C₁₀, un groupe fluoroaryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀,
et
m et n sont identiques ou différents et valent 0, 1 ou 2, m plus n valant 0, 1 ou 2, et
dans lesquels les métallocènes
dichlorure de 2,2-propyl bis(4,7-bis(diméthylamino)-1-indényl)zircone,
dichlorure de 2,2-propyl bis(4,7-diméthyl)-1-indényl)zircone,
dichlorure de rac-diméthylsilylbis(4,7-diméthylindényl-1)zircone,
dichlorure de rac-diméthylsilylbis(2,4,7-triméthylindényl-1)zircone et
dichlorure de rac-diméthylsilylbis(2,4,7-triméthyl-4,5,6,7-tétrahydroindényl-1)zircone sont exclus,
ou représente la formule Ia 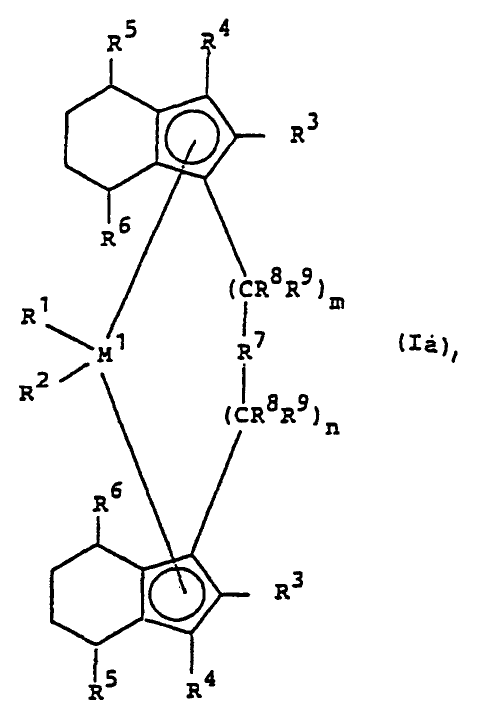 dans laquelle
M¹ représente un métal des groupes IVb, Vb ou VIb du système périodique,
R¹ et R² sont identiques ou différents et représentent un atome d'hydrogène, un groupe alkyle en C₁-C₁₀, un groupe alcoxy en C₁-C₁₀, un groupe aryle en C₆₋C₁₀, un groupe aryloxy en C₆₋C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'halogène,
R³ et R⁴ sont identiques ou différents et représentent un hydrogène, un 0atome d'halogène, un groupe alkyle en C₁-C₁₀ qui peut être halogéné, un groupe aryle en C₆-C₁₀, un reste -NR₂¹⁰, -SR¹⁰, -OSiR₃¹⁰, -SiR₃¹⁰ ou -PR₂¹⁰, dans lequel R¹⁰ représente un atome d'halogène, un groupe alkyle en C₁-C₁₀ ou un groupe aryle en C₆-C₁₀,
R⁵ et R⁶ sont identiques ou différents et ont la la signification désignée pour R³ et R⁴, à condition que R⁵ et R⁶ ne représentent pas un atome d'hydrogène,
R⁷ 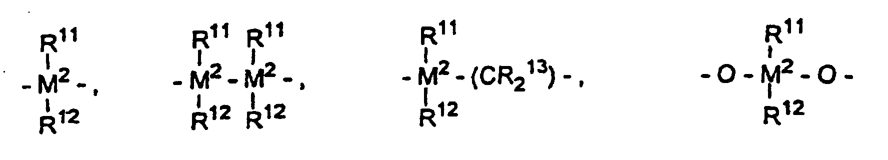 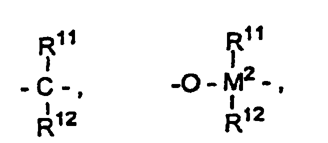 =BR¹¹, =AIR¹¹, -Ge-, -Sn-, -O-, -S-, =SO, =SO₂, =NR¹¹, =CO, =PR¹¹ ou =P(O)R¹¹,
dans laquelle
R¹¹, R¹² et R¹³ sont identiques ou différents et représentent un atome d'hydrogène, un atome d'halogène, un groupe alkyle en C₁-C₁₀, un groupe fluoroalkyle en C₁-C₁₀, un groupe aryle en C₆-C₁₀, un groupe fluoroaryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀, un groupe alkylaryle en C₇-C₄₀ ou R¹¹ et R¹² ou R¹¹ et R¹³ forment à chaque fois avec les atomes auxquels ils sont liés un noyau,
M² représente du silicium, du germanium ou de l'étain,
R⁸ et R⁹ sont identiques ou différents et ont la signification désignée pour R¹¹ et
m et n sont identiques ou différents et valent 0, 1 ou 2, m plus n valant 0, 1 ou 2.

10. Métallocène selon la revendication 9, **caractérisé en ce que** dans la formule I ou Ia, M¹ représente Zr ou Hf, R¹ et R² sont identiques ou différents et représentent un groupe alkyle en C₁-C₃ ou un atome de chlore, R³ et R⁴ sont identiques ou différents et représentent un atome d'hydrogène ou un groupe alkyle en C₁₋C₄, R⁵ et R⁶ sont identiques ou différents et représentent un groupe alkyle en C₁-C₄ qui peut être halogéné, R⁷ représente un reste 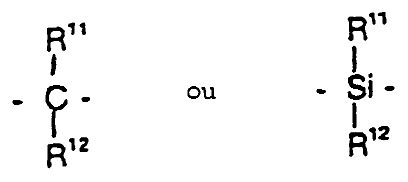 et m plus n valent 0 ou 1.

11. Métallocène selon la revendication 9 ou 10, **caractérisé en ce que** dans la formule I ou Ia, les substituants R⁵ et R⁶ sont identiques.

12. Dichlorure de rac-[diméthylsilylbis{1-(3,4,7-triméthylindényl)}]zircone,
dichlorure de rac-[1,2-butanediylbis{1-(4,7-diméthylindényl)}]zircone.

13. Catalyseur qui est formé à partir d'un catalyseur selon l'une quelconque ou plusieurs des revendications 9 à 12 et d'un cocatalyseur.

14. Catalyseur selon la revendication 13, dans lequel on utilise comme cocatalyseur un aluminoxane de formule (II) 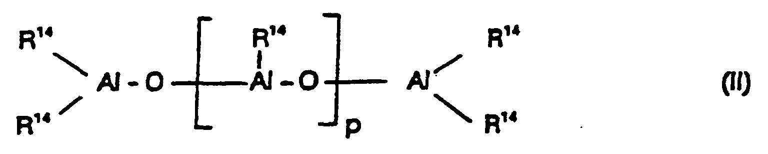 pour le type linéaire et/ou la formule (III) 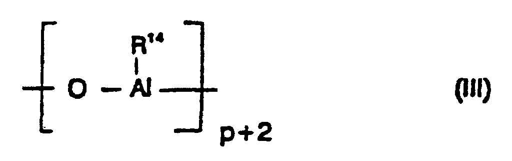 pour le type cyclique, dans lesquelles dans les formules (II) et (III), les restes R¹⁴ sont identiques ou différents et représentent un groupe alkyle en C₁-C₆ et un groupe aryle en C₆-C₁₈, un groupe benzyle ou un atome d'hydrogène et p représente un nombre entier de 2 à 50.

15. Catalyseur selon la revendication 13 ou 14, dans lequel on utilise comme cocatalyseur l'aluminoxane de méthyle.

16. Catalyseur selon l'une quelconque ou plusieurs des revendications 13 à 15, dans lequel le métallocène est appliqué sur un substrat et dans lequel les métallocènes de
dichlorure de diméthylsilylbis(2,4,7-triméthylindényl-1)zircone et de
dichlorure de diméthylsilylbis(2,4,7-triméthyl-4,5,6,7-tétrahydroindényl-1)zircone ne sont pas exclus.

17. Catalyseur, qui est composé d'un métallocène selon l'une quelconque ou plusieurs des revendications 9 à 12 et d'un cocatalyseur, dans lequel on utilise comme cocatalyseur un composé ou plusieurs composés de formules RNₓHB₄₋ₓBR'₄, RₓPH₄₋xBR'₄, R₃CBR'₄ ou BR'₃,
dans lesquelles
x représente un nombre entier de 1 à 4,
R est identique ou différent et représente un groupe alkyle en C₁-C₁₀ et un groupe aryle en C₆-C₁₈ ou 2 restes R forment avec l'atome auquel ils sont liés un noyau et
R' est identique ou différent et représente un groupe aryle en C₆-C₁₈ qui peut être substitué par un groupe alkyle, un groupe halogénoalkyle ou un atome de fluor,
ou des mélanges de ces composants avec un aluminoxane et dans lesquels les métallocènes
dichlorure de 2,2-propyl bis(4,7-bis(diméthylamino)-1-indényl)zircone,
dichlorure de 2,2-propyl bis(4,7-bis(diméthyl)-1-indényl)zircone,
dichlorure de diméthylsilylbis(2,4,7-triméthylindényl-1)zircone,
dichlorure de diméthylsilylbis(2,4,7-triméthyl-4,5,6,7-tétrahydroindényl-1)zircone
ne sont pas exclus.

18. Catalyseur selon la revendication 17, dans lequel le métallocène est appliqué sur un substrat.

19. Catalyseur selon l'une quelconque ou plusieurs des revendications 13 à 18, dans lequel le métallocène est prépolymérisé.

20. Procédé pour la fabrication d'un polymère d'oléfme par polymérisation ou copolymérisation d'une oléfine de formule R^{a}-CH=CH-R^{b}, dans laquelle R^{a} et R^{b} sont identiques ou différents et représentent un atome d'hydrogène ou un reste hydrocarboné avec 1 à 14 atomes de carbone, ou R^{a} et R^{b} avec les atomes auxquels ils sont liés peuvent former un noyau à une température de -60 à 200°C sous une pression de 0,5 à 100 bars, dans une solution, dans une suspension ou dans une phase gazeuse, en présence d'un catalyseur, **caractérisé en ce qu'**on utilise un catalyseur selon les revendications 17 à 19.
